(19) Europäisches Patentamt / European Patent Office / Office européen des brevets

(11) **EP 3 243 562 B1**

(12) **EUROPEAN PATENT SPECIFICATION**

(45) Date of publication and mention
of the grant of the patent:
**05.01.2022 Bulletin 2022/01**

(21) Application number: **16735110.5**

(22) Date of filing: **08.01.2016**

(51) Int Cl.:
**B01D 67/00** (2006.01)     **B01D 63/10** (2006.01)
**B01D 71/56** (2006.01)     **C02F 1/44** (2006.01)

(86) International application number:
**PCT/JP2016/050584**

(87) International publication number:
**WO 2016/111371 (14.07.2016 Gazette 2016/28)**

(54) **METHOD FOR IMPROVING INHIBITION PERFORMANCE OF SEMIPERMEABLE MEMBRANE**

VERFAHREN ZUR VERBESSERUNG DER HEMMUNGSLEISTUNG EINER SEMIPERMEABLEN MEMBRAN

PROCÉDÉ D'AMÉLIORATION DES PERFORMANCES DE BLOCAGE DE MEMBRANE SEMI-PERMÉABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.01.2015 JP 2015002859**

(43) Date of publication of application:
**15.11.2017 Bulletin 2017/46**

(73) Proprietor: **Toray Industries, Inc.**
**Tokyo 103-8666 (JP)**

(72) Inventors:
• **TANIGUCHI Masahide**
**Otsu-shi**
**Shiga 520-8558 (JP)**
• **TAKABATAKE Hiroo**
**Otsu-shi**
**Shiga 520-8558 (JP)**

• **SUGITA Kazuya**
**Iyo-gun**
**Ehime 791-3193 (JP)**

(74) Representative: **Hoefer & Partner Patentanwälte mbB**
**Pilgersheimer Straße 20**
**81543 München (DE)**

(56) References cited:
**EP-A1- 2 172 257     EP-A1- 2 684 598**
**JP-A- H06 254 553     JP-A- H08 309 350**
**JP-A- 2008 155 123     JP-A- 2010 104 919**

• **M Taniguchi: "Boron reduction performance of reverse osmosis seawater desalination process", Journal of Membrane Science, vol. 183, no. 2, 1 March 2001 (2001-03-01) , pages 259-267, XP055132966, ISSN: 0376-7388, DOI: 10.1016/S0376-7388(00)00596-2**

**EP 3 243 562 B1**

**Description**

TECHNICAL FIELD

The present invention relates to enhancing of the performance of a semipermeable membrane used for obtaining a low-concentration permeate by using raw water such as seawater, saline river water, groundwater, lake water and treated wastewater. More specifically, the present invention relates to a rejection performance-enhancing method capable of enhancing the rejection performance of a semipermeable membrane.

BACKGROUND ART

In recent years, depletion of water resources has become serious, and use of water resources which have not been heretofore utilized is being studied. In particular, a technique for producing potable water from seawater which is most familiar and cannot be utilized as it is, so-called "seawater desalination", and furthermore, a recycling technique of purifying sewage or wastewater and desalinating the treated water, are attracting attention. The seawater desalination has been conventionally put to practical use mainly by an evaporation method in the Middle East area where water resources are extremely scarce and thermal resources from oil are very abundant, but in the regions other than the Middle East, where thermal resources are not abundant, an energy-efficient reverse osmosis method has been employed, and with the recent enhancement of reliability and reduction in cost owing to technical progress in the reverse osmosis method, a seawater desalination plant utilizing a reverse osmosis method is being constructed in many regions including the Middle East and showing global expansion.

Recycling of sewage or wastewater is starting to be applied to inland or coastal cities or industrial districts, in which there is no fresh water source or the outflow rate is limited by effluent regulations. Among others, in Singapore that is an island country lacking water sources, water shortage is resolved by treating sewage generated in the country, storing the treated water without discharging it into sea, and reclaiming water at a potable level by means of a reverse osmosis membrane.

The reverse osmosis method applied to seawater desalination or recycling of sewage or wastewater can produce desalinated water by passing water containing a solute, such as salt, through a semipermeable membrane at a pressure not less than the osmotic pressure. This technique also makes it possible to obtain potable water from, for example, seawater, brine or harmful substance-containing water and has been used as well, e.g., for the production of industrial ultrapure water, for the wastewater treatment, or for the recovery of a valuable substance.

In order to stably operate a desalination apparatus using a reverse osmosis membrane, a pretreatment according to the quality of raw water taken is necessary. If the pretreatment is insufficient, the reverse osmosis membrane may be deteriorated or fouling (membrane surface fouling) may occur, and stable operation tends to become difficult. In particular, when a chemical substance deteriorating the reverse osmosis membrane enters the reverse osmosis membrane, an irreversible fatal situation may be caused. More specifically, the functional layer (the portion exerting a reverse osmosis function) of the reverse osmosis membrane is decomposed, and the performance of separating water from a solute, i.e., the solute rejection performance, is degraded. In the case of using a reverse osmosis membrane for applications such as seawater desalination or recycling of sewage or wastewater, it is very difficult to 100% prevent occurrence of the decomposition of the functional layer of the reverse osmosis membrane, and among others, polyamide that is the mainstream of the reverse osmosis membrane is susceptible to oxidative deterioration (Non-Patent Document 1).

In addition, despite having some degree of durability, decomposition of the functional layer is likely to occur as well when exposed to a strong acid or alkali. Once such decomposition occurs, in the case of a semipermeable membrane having an anionic charge, which is a general reverse osmosis membrane for water treatment, the charge elimination effect of the anionic charge may give a greater adverse influence on removal of neutral molecules than on separation and removal of a rejectable inorganic electrolyte, and the rejection ratio of, among others, neutral molecules is reduced. Specifically, silica, boron, sugars, etc., which are not dissociated in a neutral region, causes a prominent decline in the water quality. Usually, the reverse osmosis membrane having lost the required rejection performance must be replaced with a new one, naturally leading to an increase in the treatment cost.

Accordingly, development of a technique for recovering the rejection performance of a reverse osmosis membrane is proceeding for many years, and there have been proposed a number of methods for recovering the rejection performance of a reverse osmosis membrane and a number of recovering agents therefor, such as a method of contacting and reacting a vinyl-based polymer (Patent Documents 1 and 2), a method of contacting a polyethylene glycol with the reverse osmosis membrane to enhance the rejection ratio, particularly, the rejection ratio for a nonionic solute (Patent Documents 3 and 4), a method of contacting a nonionic surfactant with the membrane surface of a reverse osmosis membrane having an anionic charge and being increased in the permeation flux (Patent Document 5), a method of contacting an iodine and/or iodine compound having an oxidation-reduction potential of 300 mV or more (Patent Document 6), and a method of contacting an aqueous solution of a strong mineral acid such as phosphoric acid, phosphorous acid and sulfuric acid, raising the temperature and then contacting a rejection performance enhancer such as hydrolyzable tannic acid (Patent Document 7). These treatments for recovering the rejection performance have various technical issues.

That is, depending on the kind or state (fouling, deterioration) of the reverse osmosis membrane, the treatment environment such as water temperature, or the conditions at the time of conducting the treatment (e.g., temperature of treatment liquid, concentration, treatment time), the effect of the rejection performance-enhancing treatment may vary, or reduction in the water permeation performance, which is in a sense a side effect of the rejection performance-enhancing treatment, may also vary. In addition, for example, the performance long-sustaining effect after enhancing the rejection ratio varies as well, and difficulty is often involved, for example, the water quality at the time of fresh-water generation operation after the rejection performance-enhancing treatment may be insufficient, or the operation pressure may be inadequate.

Because, in large plants for seawater desalination or sewage recycling, which have been rapidly constructed and started running since entering the 2000s, a large number of reverse osmosis membranes are used or raw water in natural environments, such as seawater, is treated and therefore, even if a pretreatment is performed, the reverse osmosis membrane is operated while being subject to influence from season, rise and fall of tide, red tide, and other weather or natural environments, as a result, the reverse osmosis membrane assumes a variety of states in the same plant. In addition, for implementing the rejection performance-enhancing treatment, the normal fresh-water generation treatment is once stopped, and the raw water to be treated at the time of operation is then replaced by a rejection performance enhancer through a chemical cleaning line, which is attended by many problems, for example, the utilization rate is reduced, complicated efforts are required, or unless the rejection performance or water permeation performance is also measured under normal operation conditions by again passing raw water to be treated after the completion of the treatment, the final effect is not judged.

With respect to these problems, in order to solve the influence on the treatment effect due to difference in the state of reverse osmosis membrane, for example, as illustrated in Patent Document 8, a technique of cleaning the reverse osmosis membrane with chemicals and thereafter applying a rejection performance-enhancing treatment is adopted in general. Furthermore, as described in Patent Document 9, a pretreatment of cleaning the membrane with high-temperature water and contacting a rejection performance enhancer has also been proposed. As to the method for judging the effect of the rejection performance-enhancing treatment, a method of confirming the treatment effect by adding a substance becoming a marker to a rejection performance enhancer and detecting the concentration of the marker substance in the permeate has been proposed (Patent Document 10). A method of determining the completion of treatment by monitoring the feed concentration and discharge concentration of rejection performance enhancer so as not to spend wasted recovering treatment time any more after saturation of the rejection ratio-enhancing treatment is reached, has also been proposed (Patent Document 11).

However, in these methods, only a relative treatment effect is known by seeing the performance during the rejection performance-enhancing treatment, the performance in an actual operation environment is difficult to grasp, and since the efficiency or effect of the treatment can be hardly controlled in the first place, it is often a practice to rely on on-the-spot try and error.

BACKGROUND ART DOCUMENT

PATENT DOCUMENT

Patent Document 1: JP-A-55-114306
Patent Document 2: JP-A-59-30123
Patent Document 3: JP-A-2007-289922
Patent Document 4: JP-A-2008-132421
Patent Document 5: JP-A-2008-86945
Patent Document 6: JP-A-2011-161435
Patent Document 7: JP-A-2-68102
Patent Document 8: JP-A-2008-36522
Patent Document 9: JP-A-2009-22888
Patent Document 10: JP-A-2008-155123
Patent Document 11: JP-A-2008-183488

Further relevant prior art addressing the membrane performance is represented by EP 2 684 598 A1  and EP 2 172 257 A1.

NON-PATENT DOCUMENT

Non-Patent Document 1: Tadahiro UEMURA, et al., "Chlorine Resistance of Composite Reverse Osmosis Membranes and Changes in Membrane Structure and Membrane Separation Properties Caused by Chlorination Degradation", Bulletin of the Society of Sea Water Science, Japan, Vol. 57, No. 3 (2003)
Non-Patent Document 2: M. Taniguchi, et al., "Boron Reduction performance of reverse osmosis seawater desalination process", Journal of Membrane Science, 183, 259-267 (2001)

SUMMARY OF THE INVENTION

PROBLEMS THAT THE INVENTION IS TO SOLVE

An object of the present invention is to provide a rejection performance-enhancing method enabling a semipermeable membrane such as nanofiltration membrane or reverse osmosis membrane to enhance the rejection performance of the semipermeable membrane, particularly, the rejection performance for nonionic substances.

MEANS FOR SOLVING THE PROBLEMS

In order to solve the above-described problem, the present invention provides a method as defined in the appended claims.

ADVANTAGE OF THE INVENTION

According to the rejection performance-enhancing method of the present invention, when the permeate quality is degraded due to reduction in the rejection performance of a nanofiltration membrane or a reverse osmosis membrane in a fresh-water generation apparatus such as seawater desalination or sewage recycling, the rejection performance can be improved while minimizing the reduction in water permeation performance of a semipermeable membrane, and the water quality of a removal target substance such as inorganic electrolyte or neutral molecular can thereby be efficiently improved.

BRIEF DESCRIPTION OF THE DRAWINGS

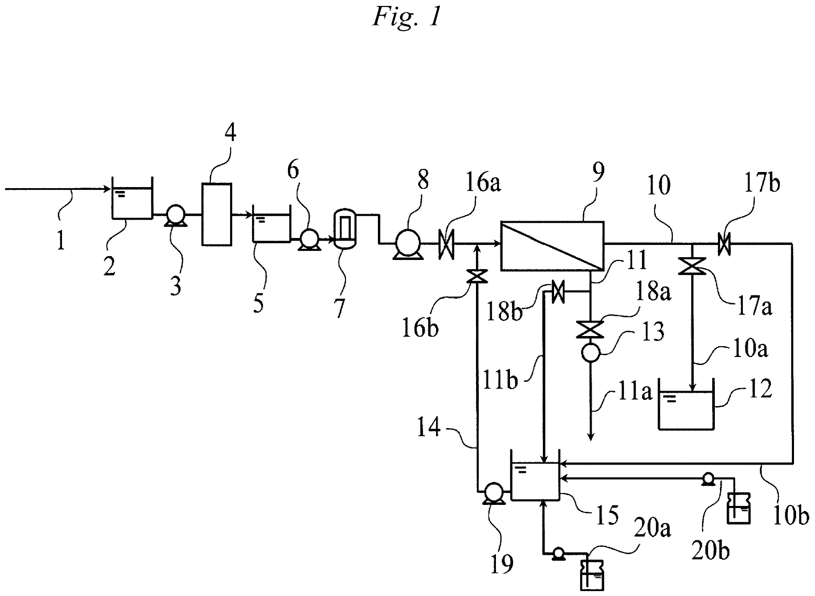

[Fig. 1] Fig. 1 is a diagram illustrating one example of the process flow of a semipermeable membrane fresh-water generation apparatus to which the semipermeable membrane rejection performance-enhancing method according to the present invention can be applied.

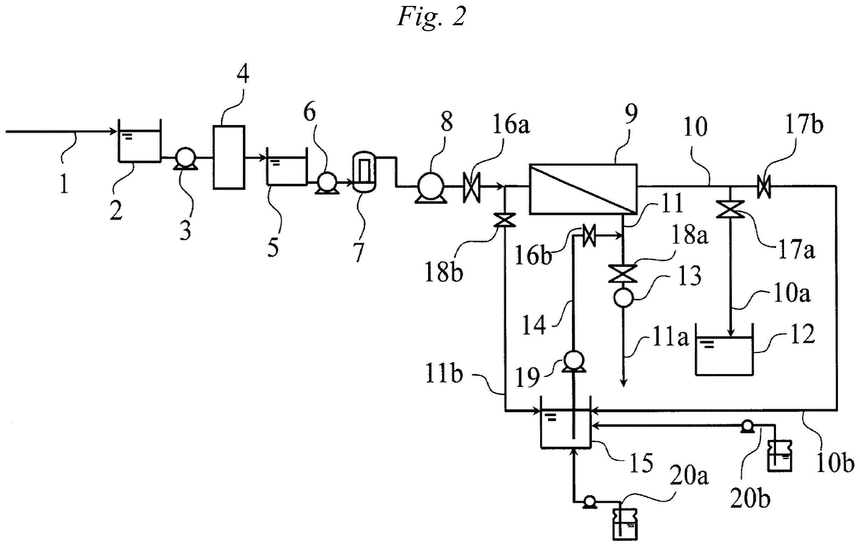

[Fig. 2] Fig. 2 is a diagram illustrating one example of the process flow of a semipermeable membrane fresh-water generation apparatus to which the semipermeable membrane rejection performance-enhancing method according to the present invention can be applied by reversing the flow on the semipermeable membrane.

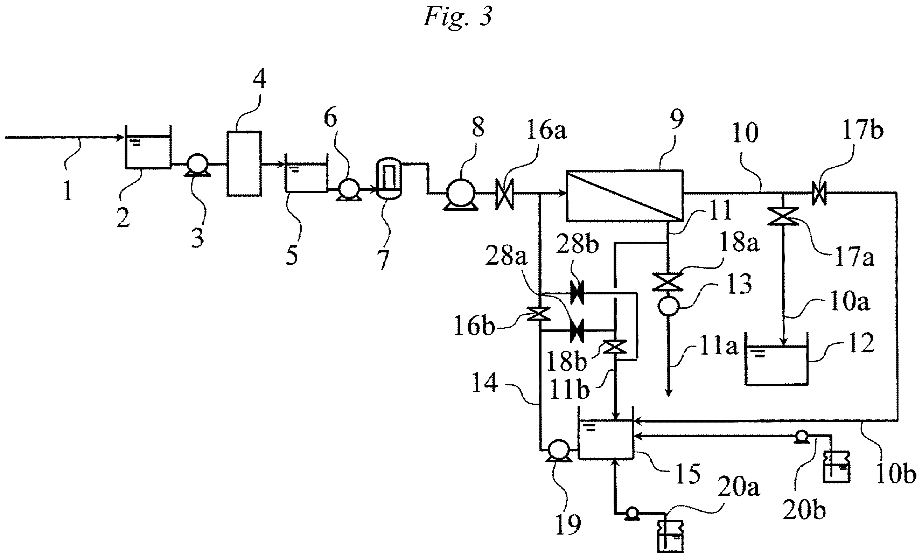

[Fig. 3] Fig. 3 is a diagram illustrating one example of the process flow of a semipermeable membrane fresh-water generation apparatus to which the semipermeable membrane rejection performance-enhancing method according to the present invention can be applied by switching to a reverse flow on the semipermeable membrane.

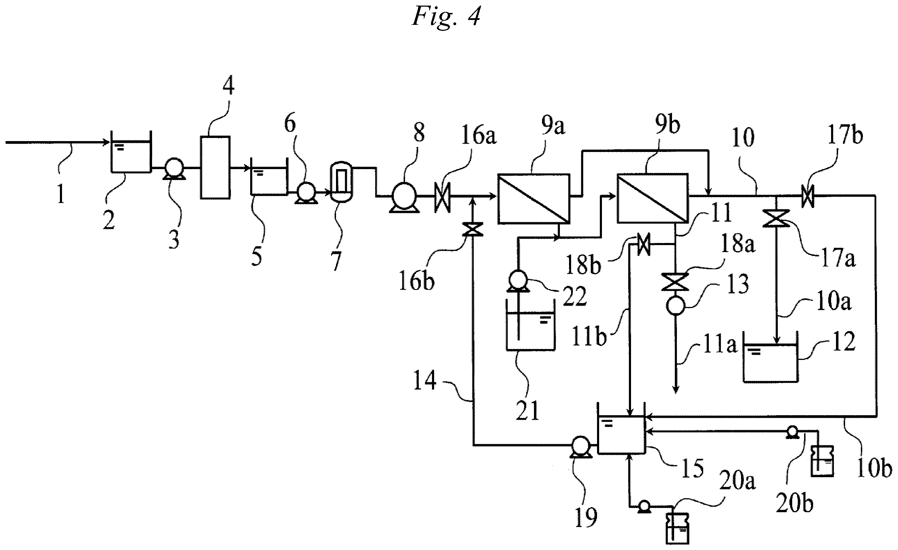

[Fig. 4] Fig. 4 is a diagram illustrating one example of the process flow of a semipermeable membrane fresh-water generation apparatus to which a rejection performance-enhancing method can be applied by arranging a plurality of semipermeable membranes in series and performing intermediate dilution.

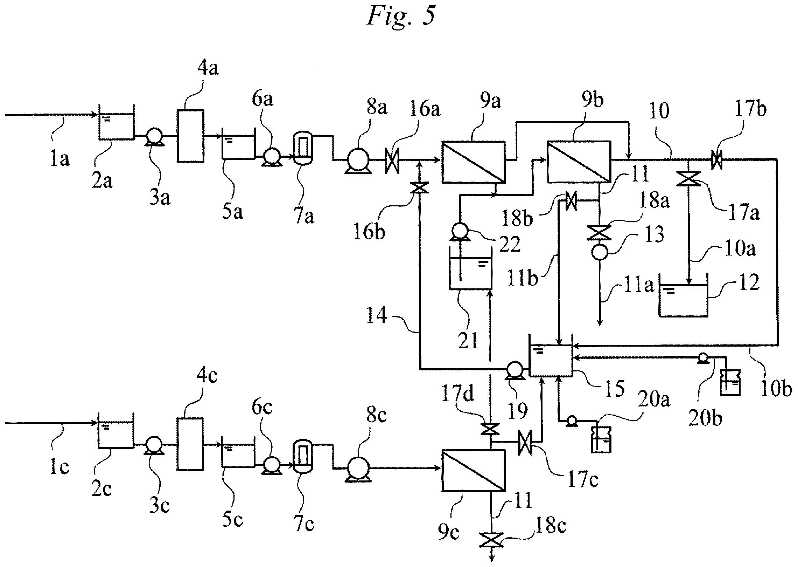

[Fig. 5] Fig. 5 is a diagram illustrating one example of the process flow of a semipermeable membrane fresh-water generation apparatus to which a rejection performance-enhancing method can be applied by arranging a plurality of semipermeable membranes in series and performing intermediate dilution with a permeate from another system.

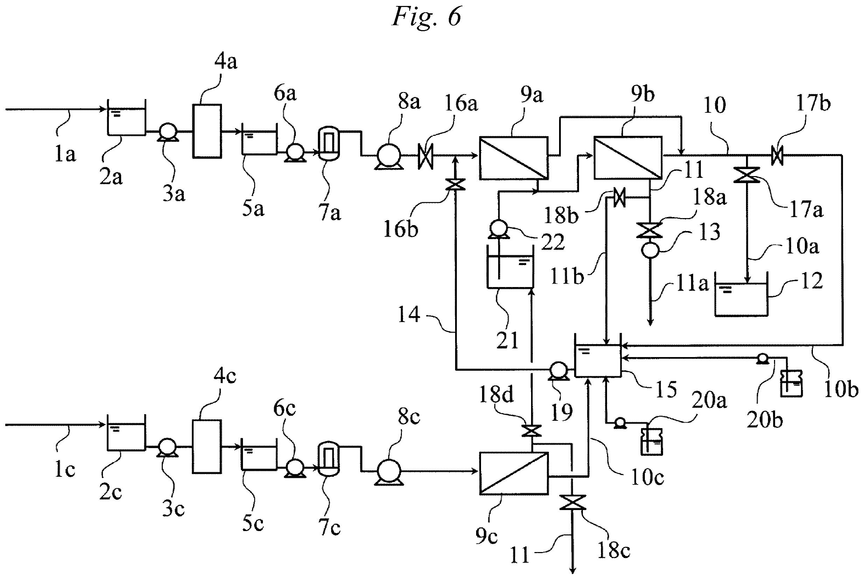

[Fig. 6] Fig. 6 is a diagram illustrating one example of the process flow of a semipermeable membrane fresh-water generation apparatus to which a rejection performance-enhancing method can be applied by arranging a plurality of semipermeable membranes in series and performing intermediate dilution with a concentrate from another system.

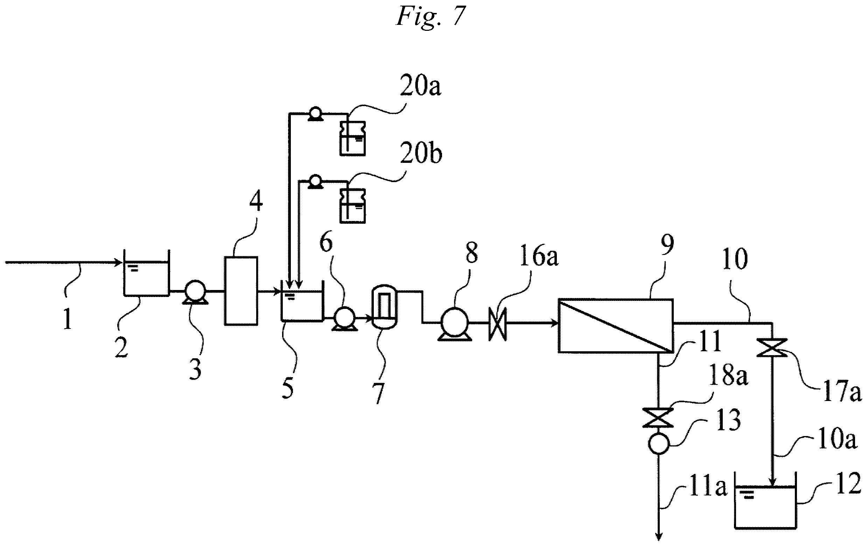

[Fig. 7] Fig. 7 is a diagram illustrating one example of the process flow of a semipermeable membrane fresh-water generation apparatus in which a fresh-water generation operation is performed while applying the semipermeable membrane rejection performance-enhancing method according to the present invention.

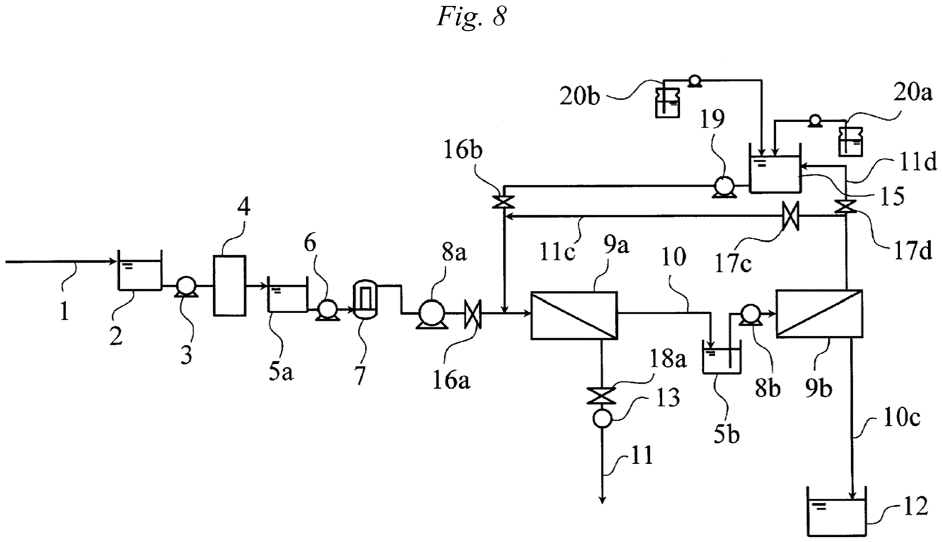

[Fig. 8] Fig. 8 is a diagram illustrating another example of the process flow of a semipermeable membrane fresh-water generation apparatus to which a rejection performance-enhancing method can be applied by arranging a plurality of semipermeable membranes in series and using a second semipermeable membrane concentrate.

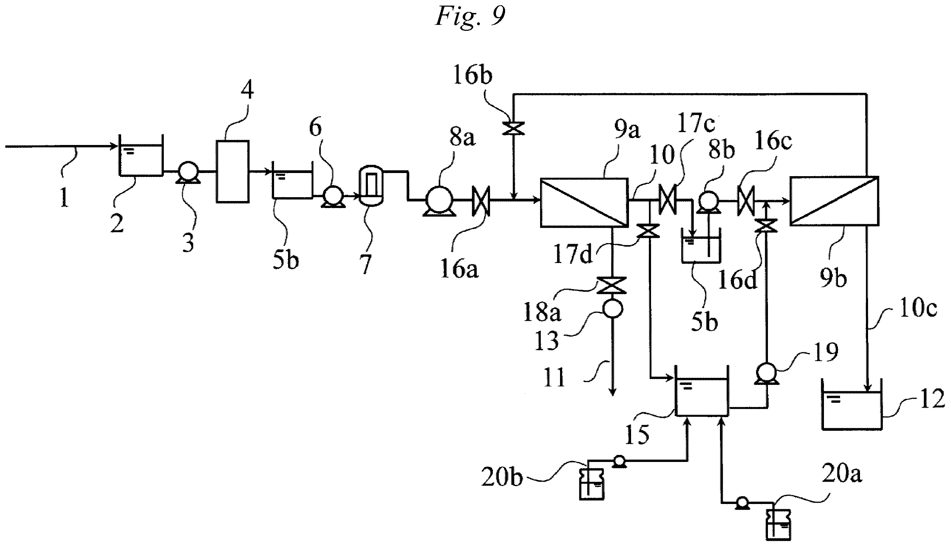

[Fig. 9] Fig. 9 is a diagram illustrating another example of the process flow of a semipermeable membrane fresh-water generation apparatus to which a rejection performance-enhancing method can be applied by arranging a plurality of semipermeable membranes in series and using a first semipermeable membrane permeate.

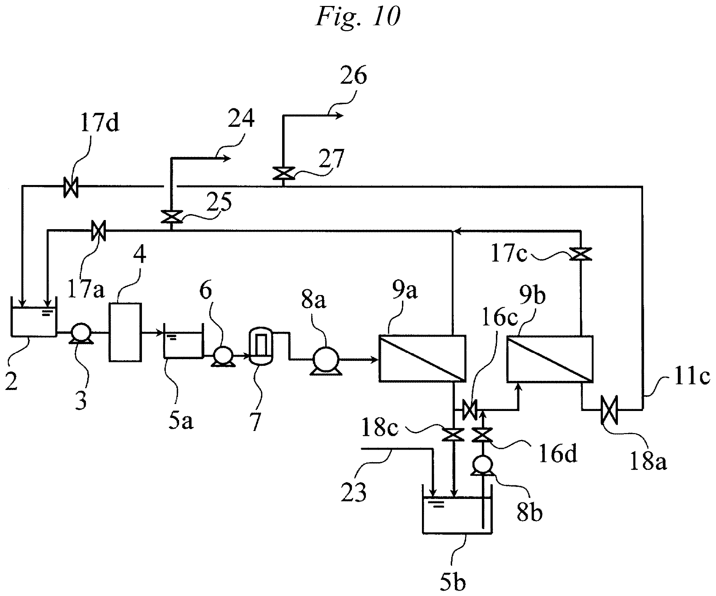

[Fig. 10] Fig. 10 is a diagram illustrating one example of the process flow of a testing device used for measuring the effect produced by the rejection performance-enhancing method of Example.

MODE FOR CARRYING OUT THE INVENTION

Preferred embodiments of the present invention are described below by referring to the drawings. However, the scope of the present invention is as defined in the appended claims.

Fig. 1 illustrates one example of a semipermeable membrane separation apparatus to which the semipermeable membrane rejection performance-enhancing method of the present invention can be applied. In the case where the semipermeable membrane frcsh-watcr generation apparatus illustrated in Fig. 1 is operated to generate fresh water, raw water fed through a raw water line 1 is temporarily stored in a raw water tank 2, then delivered to a pretreatment unit 4 by a raw-water feed pump 3, and pretreated. The pretreated water passes through an intermediate water tank 5, a feed pump 6 and a safety filter 7 and after boosting the pressure by a booster pump 8, is separated into a permeate and a concentrate in a semipermeable membrane unit 9 including a semipermeable membrane module. The permeate is stored in a product water tank 12 through a product water line 10a. The concentrate is discharged outside the system through a concentrate discharge line 11a after recovering its pressure energy by an energy recovery unit 13.

During the fresh-water generation operation, a feed water valve 16a, a permeate valve 17a and a concentrate valve 18a are opened, and a feed chemical valve 16b, a permeated chemical valve 17b and a concentrated chemical valve 18b are closed.

A chemical circulation line used at the time of applying the present invention includes a chemical tank 15, a chemical feed pump 19 and a chemical dosing unit 20 (20a, 20b), and while a chemical fed to the semipermeable unit 9 through the chemical feed line 14 and permeated (depending on the kind of the chemical, all solutes are rejected and in this case, only a solvent) is refluxed to the chemical tank 15 through a permeate line 10 and a permeated chemical line, a concentrated chemical that is not permeated is refluxed to the chemical tank 15 through a concentrate line 11 and a concentrated chemical line 11b.

During the semipermeable membrane rejection performance-enhancing treatment, the feed water valve 16a, the permeate valve 17a and the concentrate valve 18a are closed, and the feed chemical valve 16b, the permeated chemical valve 17b and the concentrated chemical valve 18b are opened.

Here, the chemical circulation line can also be utilized when the semipermeable membrane is subjected to circulation cleaning by means of an acid, an alkali, a detergent, etc.

In the case of pressurizing and feeding a liquid containing a rejection performance enhancer of the present invention, a liquid having added thereto a rejection performance enhancer and a solute, to which the present invention is applied, may be previously prepared in the chemical tank 15, or as illustrated in Fig. 1, for example, a rejection performance enhancer and a solute may be added by the chemical dosing unit 20a and the chemical dosing unit 20b, respectively. Furthermore, it is also preferable to apply a solute contained in the semipermeable membrane feed water or semipermeable membrane concentrate as the solute of the present invention. In this case, for example, any one of semipermeable membrane feed water, semipermeable membrane concentrate and semipermeable membrane permeate is first fed and stored in the chemical tank 15 during fresh-water generation operation or before and after fresh-water generation operation. Simultaneously with or after the completion of the storing work, a rejection performance enhancer is added with a predetermined concentration from the chemical dosing unit 20a. This makes it unnecessary to procure a solute/a solvent for the liquid of the present invention from outside the system and in addition, makes it possible to prepare a liquid having an osmotic pressure appropriate to the purpose. Of course, a solute may be fed from outside the system, i.e., by the chemical dosing unit 20b while using the semipermeable membrane permeate as a solvent.

Intensive studies by the present inventors have revealed that, for achieving an efficient rejection performance-enhancing treatment aimed by the present invention, it is very effective to provide, in a method of enhancing a rejection performance of a semipermeable membrane by pressurizing and feeding a liquid containing a rejection performance enhancer to a primary side of the semipermeable membrane to come into contact with the membrane surface thereof, a step of changing, during the feeding of the liquid containing the rejection performance enhancer, at least either the pressure acting on the membrane surface or the permeation flow rate from that at the time of normal treatment, followed by maintaining the changed pressure or permeation flow rate.

As a specific method, the pressure is changed at least once, whereby the object of the present invention can be achieved.

The object of the present invention can be effectively achieved by changing the pressure at a rate of 0.05 MPa/s or more.

Since the purpose is to change the permeation flow rate, the change in the feed flow rate must be appropriately set depending on the feeding conditions, and as to the change in the permeation flux (=permeation flow rate per membrane area), fluctuation to 0.8 times or less or 1.2 times or more that before the change may be effective but is more preferably from 0.6 to 0.8 times or from 1.2 to 1.5 times, because rapid fluctuation places a burden on the semipermeable membrane.

A method of setting the permeation flow rate to 0.1 times or less the permeation flow rate at the time of normal treatment is preferred as well. In other words, it is also effective to perform flushing of allowing the permeate to approach substantially zero. In particular, for performing the flushing, the flow is easily switched by a simple method such as opening of the concentrate side of the semipermeable membrane or full closing of the permeation side and therefore, the flushing can be easily and simply conducted, which is preferred. The time for which the pressure or permeation flow rate in the present invention is maintained after being changed is from 10 seconds to 10 minutes.

The number of flushings is not particularly limited, and it is also preferable to intermittently conduct the flushing while monitoring the effect. The same effect can also be obtained by the change in the permeation flow rate. In this case, the change may be achieved, as described above, by a pressure change on the primary side but can also be achieved by a pressure change on the secondary side. In addition, the permeation flux can be changed also by changing the concentration of the solute used in the present invention, thereby changing the osmotic pressure at the membrane surface. In such a case, when the raw water at the time of fresh water generation is seawater, the osmotic pressure can be greatly fluctuated without spending a cost on chemicals, which is preferred.

Furthermore, for achieving an efficient rejection performance-enhancing treatment aimed by the present invention, when a constant X is determined according to the kind of the rejection performance enhancer and a quantity of the liquid containing the rejection performance enhancer fed to the semipermeable membrane is denoted as $Q_F$ [m$^3$/day], a quantity of the liquid containing the rejection performance enhancer permeated through the semipermeable membrane is denoted as $Q_p$ [m$^3$/day], the membrane area of the semipermeable membrane is denoted as A [m$^2$], the rejection performance enhancer concentration is denoted as C [mg/l], the liquid transit time is denoted as t [h], and the osmotic pressure of the fed liquid is denoted as $\pi$, the treatment is preferably applied to satisfy:

$$1.0X \leq Q_{PT}/A \times C \times t \leq 1.4X$$

and

$$0.02 \leq Q_{PT}/Q_{FT} \leq 0.2$$

in the case where the osmotic pressure $\pi$ is less than 1 bar;

$$0.8X \leq Q_{PT}/A \times C \times t \leq 1.2X$$

and

$$0.2 \leq Q_{PT}/Q_{FT} \leq 0.4$$

in the case where the osmotic pressure $\pi$ is 1 bar or more and less than 20 bar or less; and

$$0.6X \leq Q_{PT}/A \times C \times t \leq 1.0X$$

and

$$0.3 \leq Q_{PT}/Q_{FT} \leq 0.5$$

in the case where the osmotic pressure $\pi$ is 20 bar or more and 40 bar or less.

Here, $Q_{PT}/A$ indicates the permeation flow rate per membrane area, i.e., the permeation flux, and $Q_{PT}/A \times C \times t$ established by multiplying $Q_{PT}/A$ by the concentration C and the time t means the total amount of the rejection performance enhancer per membrane area, which is put into contact (passed or rejected) from the primary side (feed side) to the secondary side (permeation side) of the semipermeable membrane. As to the method for determining X in those formulae, the value can be obtained by previously conducting a test using the liquid containing the rejection performance enhancer employed.

Specifically, for example, a treatment liquid is prepared by dissolving 500 mg/L of NaCl in 100 L of pure water, a semipermeable membrane as a target of treatment is set in a flat-sheet membrane cell described in Non-Patent Document 2, and the initial performance of the semipermeable membrane is measured by circulating the treatment liquid at a flow rate of 3.5 L, 25°C and a pressure of 4.5 bar. Here, all of the permeate and the concentrate are cyclically utilized.

At this time, the permeation flux F (=permeate quantity/membrane area) and the NaCl rejection performance R (=100-100×NaCl concentration of permeate/NaCl concentration of treatment liquid) are measured to obtain $R_0$ as the target rejection performance and $F_1$ and $R_1$ as the initial performance. Subsequently, 2 μmol/L of a rejection performance enhancer is added as the rejection performance-enhancing treatment, and after treating for a set time, temporal changes of permeation flux $F_2$ and NaCl rejection performance $R_2$ are measured. The time [h] until the rejection performance improvement ratio $R_{IM}=(R_0-R_1)/(R_0-R_2)=(C_{P0}-C_{P1})/(C_{P0}-C_{P2})$ exceeds 2 is measured, and this time is taken as X.

At this time, unless the permeation flux retention ratio=$F_2/F_1$ is 0.5 or more, the rejection performance enhancer is not used. The conditions for measuring the membrane performance change are not particularly limited, but the performance change is preferably measured under the conditions close to those in fresh-water generation operation or under the standard conditions of the semipermeable membrane (in the case of a commercial product, the catalogue conditions).

At the time of conducting the rejection performance-enhancing treatment, it is preferable to select the kind and concentration of the solute and the osmotic pressure, according to the kind of the rejection performance enhancer and the state of the semipermeable membrane unit.

Case A: Enhancer L + Solute L

In the case of using a rejection performance enhancer offering a low rejection ratio in a semipermeable membrane (hereinafter, enhancer L), when a liquid containing a solute subject to low rejection performance (hereinafter, solute L) or having a low osmotic pressure is used, both enrichment of the rejection performance enhancer due to enrichment caused by separating the permeate throughout from inlet to outlet of the semipermeable membrane unit, and an osmotic pressure rise are less likely to occur, and the rejection performance enhancer can make even contact over the entire semipermeable membrane throughout from inlet to outlet. This means that the semipermeable membrane rejection performance-enhancing treatment tends to be uniformly performed.

Specifically, for example, when the deterioration of the semipermeable membrane, like the change in the influence of the to-be-treated feed water temperature on the semipermeable membrane throughout from inlet to outlet, is small, a combination of an enhancer L + a solute L is suitable.

Case B: Enhancer H + Solute H

In the case of using a rejection performance enhancer offering a high rejection ratio in a semipermeable membrane (hereinafter, enhancer H), when a liquid containing a solute subject to high rejection performance (hereinafter, solute H) or having a high osmotic pressure is used, the concentration of the enhancer H is higher the closer to outlet due to enrichment caused by separating the permeate throughout from inlet to outlet of the semipermeable membrane unit. However, the concentration of the solute H is higher as well.

Consequently, the permeation flux is decreased throughout from inlet to outlet, resulting in a low rejection performance enhancer concentration and a large permeation flux at the inlet and a high rejection performance enhancer concentration and a small permeation flux at the outlet, and the rejection performance enhancer contacted therefore becomes better balanced throughout from inlet to outlet, which is preferred. In addition, depending on the operation conditions, the effect-producing speed at the inlet can be made relatively higher or relatively lower.

Specifically, similarly to Case A, for example, when the deterioration of the semipermeable membrane, like the change in the influence of the to-be-treated feed water temperature on the semipermeable membrane throughout from inlet to outlet, is small or when the influence on the semipermeable membrane is somewhat changed, a combination of an enhancer H + a solute H is suitable.

Case C: Enhancer L + Solute H

In the case of an enhancer L, when a solute subject to reasonably high rejection performance of the semipermeable membrane to produce an osmotic pressure (hereinafter, solute H) is incorporated, the permeation flux is large near the inlet of the semipermeable membrane unit, resulting in a high effect-producing speed of a rejection performance enhancer, and the permeation reflux is decreased as it gets closer to the vicinity of the outlet due to an increase in the osmotic pressure resulting from enrichment of the solute, as a result, the effect-producing speed of the rejection performance enhancer decreases. That is, the method above is a preferable implementation method when it is required to greatly enhance the rejection performance nearer the inlet.

Specifically, for example, as in seawater desalination, the permeation flux during fresh water generation is large to readily cause fouling in the vicinity of the inlet of the semipermeable membrane unit, compared with the vicinity of the outlet. In the case where an oxidizing agent penetrates the semipermeable membrane, the influence of the oxidizing agent is larger nearer the inlet, and deterioration of the semipermeable membrane is relatively large. Accordingly, in such a case, a method of positively effecting the treatment in the vicinity of inlet by employing a combination of an enhancer L + a solute H is suitable. In the case of seawater desalination, since seawater can be used as the solute H, the method above is suitable among others.

Case D: Enhancer H + Solute L

In the case of an enhancer H, the concentration of the rejection performance enhancer is more enriched the nearer the outlet. On the other hand, the rise in the osmotic pressure due to enrichment of the solute is small and therefore, the effect-producing speed of the rejection performance enhancer is higher as it goes toward the outlet from the inlet. Such a method is effective when the semipermeable membrane is more damaged in the vicinity of the outlet, for example, when precipitation of scale occurs.

Furthermore, in the rejection performance-enhancing treatment, as illustrated in Fig. 2, Case C and Case D are reversed by reversing the direction of feed to the semipermeable membrane. That is, the performance in the vicinity of the outlet during fresh water generation can be preferentially enhanced by an enhancer L + a solute H, or the performance in the vicinity of the inlet during fresh water generation can be preferentially enhanced by an enhancer H + a solute L. Of course, as illustrated in Fig. 3, a configuration enabling switching of a chemical feed line is also preferred, and it may also be possible to intermittently reverse the flow. Specifically, during the semipermeable membrane rejection performance-enhancing treatment, the feed water valve 16a, the permeate valve 17a and the concentrate valve 18a are closed; in the case of feeding chemicals in the forward direction, the feed chemical valve 16b, the permeated chemical valve 17b and the concentrated chemical valve 18b are opened, and the valve 28a and the valve 28b are closed; and in the case of feeding the chemicals in the reverse direction, the valve 28a, the permeated chemical valve 17b and the valve 28b are opened, and the feed chemical valve 16b and the concentrated chemical valve 18b are closed.

Here, the component incorporated into the rejection performance enhancer for use in the present invention is a vinyl-based polymer or compounds having a polyalkylene glycol chain. Examples of the vinyl-based polymer include polyvinyl acetate, polyvinyl alcohol, a vinyl acetate-ethylene copolymer, a vinyl chloride copolymer, a styrene-vinyl acetate copolymer, and an N-vinylpyrrolidone-vinyl acetate copolymer.

Examples of the polyalkylene glycol chain include a polyethylene glycol chain, a polypropylene glycol chain, a polytrimethylene glycol chain, and a polytetramethylene glycol chain. These glycol chains can be formed, for example, by ring-opening polymerization of ethylene oxide, propylene oxide, oxetane, tetrahydrofuran, etc.

The rejection performance enhancer applied to the present invention is required to contain another solute (a solute different from the rejection performance enhancer), and the component thereof is not particularly limited but it must be kept in mind not to contain an oxidizing agent or suspended substance affecting the performance of the semipermeable membrane, a compound such as surfactant which adsorbs to the membrane and deteriorates the performance, and a component such as organic solvent or oil. From this viewpoint, it is particularly preferable to apply a polyalkylene glycol to a semipermeable membrane containing polyamide as a main component, because the effect is great.

As the compound having a polyalkylene glycol chain for use in the present invention, a compound where an ionizable group is introduced into a polyalkylene glycol chain can be used. Examples of the ionizable group include a sulfo group, a carboxy group, a phospho group, an amino group, and a quaternary ammonium group. By introducing such an ionizable group, a water-soluble polymer compound having anionic or cationic properties is obtained. The polyalkylene glycol chain for use in the present invention is, among others, preferably a polyethylene glycol chain. A compound having a polyethylene glycol chain has large water solubility, facilitating handling as a rejection performance enhancer, and since its affinity for the composite membrane surface is high, performance reduction with time after the treatment is lessened.

Among these, as the enhancer L or solute L, a compound for which the semipermeable membrane applied has preferably a rejection performance of 50% or less, more preferably a rejection performance of 20% or less, is selected. On the contrary, as the enhancer H or solute H, a compound offering preferably a rejection performance of 70% or more, more preferably a rejection performance of 90% or more, is selected.

In particular, the polymer to which the present invention is applied can be appropriately selected according to the performance of the semipermeable membrane or the component intended to enhance the rejection performance. Specifically, for example, in the case of a reverse osmosis membrane having a sodium chloride removal ratio of 90% or more, when a polyalkylene glycol is used as the rejection performance enhancer, its weight average molecular weight is from 6,000 to 100,000, more preferably from 7,500 to 50,000. If the weight average molecular weight of the polyalkylene glycol chain is less than 6,000, the rejection ratio of the semipermeable membrane is not sufficiently enhanced, and the fixability after treatment may be reduced. By keeping the weight average molecular weight within 100,000, not only an extreme decrease in the permeation flux is suppressed but also good solubility in water is maintained, enabling simple and easy handling.

In the case of improving the rejection performance for non-dissociative boron, etc. which are very difficult to remove by a semipermeable membrane, it is effective for a rejection performance enhancer having a weight average molecular weight of 2,000 or less to contain at least a polyalkylene glycol chain having a weight average molecular weight of 2,000 or less. As to the semipermeable membrane suitable for this method, application to a high removal-ratio membrane exhibiting a removal ratio of 99.5% or more, preferably 99.8% or more, for 2,000 mg/L sodium chloride is particularly effective.

On the other hand, in the case of a loose RO or a nanofiltration membrane each exhibiting a sodium chloride removal ratio of 50% or less, it is effective for a polyalkylene glycol as a rejection performance enhancer to have a weight average molecular weight of 10,000 to 100,000. Particularly, in the case of wishing to remove a divalent ion without removing a monovalent ion as in a loose RO membrane or a nanofiltration membrane, when a polyalkylene glycol having a weight average molecular weight of 20,000 or more is used, the divalent ion removal performance can be advantageously improved while not raising the monovalent ion rejection performance as much as possible.

The weight average molecular weight can be determined by analyzing an aqueous solution of a compound having a polyalkylene glycol chain with gel permeation chromatography (GPC), and calculating the molecular weight in terms of polyethylene oxide standards from the obtained chromatogram.

In the case of using a semipermeable membrane for seawater desalination, from the viewpoint of high rejection performance of the semipermeable membrane, a rejection performance enhancer H is preferably used as the rejection performance enhancer of the present invention. In the case of a semipermeable membrane for seawater desalination, the weight average molecular weight is preferably from 2,000 to 50,000, more preferably from 2,000 to 20,000. In the case of a semipermeable membrane having a lower rejection performance than that for seawater desalination, such as low-pressure reverse osmosis membrane, loose reverse osmosis membrane or nanofiltration membrane, it is preferably from 6,000 to 100,000.

Here, as for the calculation of the osmotic pressure, in the case of a single component, the osmotic pressure can be determined according to the Van't Hoffs formula $Po = n \times R \times (273.15 + T)$. In the case of a seawater component, the approximation formula described in Non-Patent Document 2 may also be used.

As the material of the semipermeable membrane applicable to the present invention, a polymer material such as cellulose acetate-based polymer, polyamide, polyester, polyimide and vinyl polymer can be used. As for the membrane structure, an asymmetric membrane having a dense layer on at least one surface of the membrane and having micropores with a pore size gradually increasing in the direction from the dense layer toward the inside of the membrane or the other surface, or a composite semipermeable membrane having a very thin separation functional layer formed by another material on the supporting membrane, may be used.

In particular, the semipermeable membrane suitable for the present invention is preferably a composite reverse osmosis membrane using polyamide as a separation functional layer, or a nanofiltration membrane, each satisfying all of high pressure resistance, high water permeability and high solute removal performance and having excellent performance. Particularly, in the case of using seawater as the raw water, a pressure not less than the osmotic pressure needs to be applied to the composite semipermeable membrane, and an operating pressure of at least 5 MPa is often loaded. In order to maintain high water permeability and rejection performance against this pressure, a membrane having a structure in which polyamide is used as a separation functional layer and the layer is held by a support including a microporous membrane or nonwoven fabric, is suitable. As the polyamide semipermeable membrane, a composite semipermeable membrane having a separation functional layer formed of a crosslinked polyamide obtained by polycondensation reaction between a polyfunctional amine and a polyfunctional acid halide, is suitable.

Furthermore, in the composite semipermeable membrane, since the amount of a separation functional layer is small, a rejection performance enhancer effectively acts on a functional layer portion exerting the rejection performance and therefore, application thereto is preferred. In such a semipermeable membrane for water treatment, the pH of raw water to be treated is generally in a neutral region, and in this region, the membrane surface is negatively charged so as to prevent adsorption of a natural organic material, i.e., the surface membrane potential is minus (-), whereas an isoelectric point is generally in a weakly acidic region, i.e., the surface potential becomes 0. In the case of using an uncharged or weakly-charged rejection performance enhancer for the rejection performance-enhancing treatment according to the present invention, the treatment effect sustainability can be increased by making the semipermeable membrane surface potential neutral, and the treatment is therefore preferably performed in a weakly acidic region, specifically, at a pH of 4 to 7, preferably at a pH of 5.5 to 6.8.

In the present invention, the semipermeable membrane can be used as a semipermeable membrane element embodied for practical use. In the case where the membrane form of the semipermeable membrane is a flat-sheet membrane, the semipermeable membrane can be used by incorporating it into a spiral-wound, tubular or plate-and-frame module, but among others, in the case of using a spiral-wound shape, for the reason that in view of the structure, the rejection performance enhancer flows in a one-way direction from one-side end face to opposite-side end face and since a member such as feed water-side channel material and permeate-side channel material is incorporated, the rejection performance enhancer tends to uniformly act on the membrane surface, the element is preferably used as a semipermeable membrane element to which the present invention is applied. Of these, as for the feed water-side channel member through which a liquid containing a rejection performance enhancer is passed, it is preferable to have a thickness of 0.6 mm to 1.0 mm, particularly from 0.7 mm to 0.9 mm, and be applied to a spiral-wound element having a porosity of 0.8 or more, because the treatment liquid is likely to be evenly put into contact.

In the rejection performance-enhancing method of the present invention, the rejection ratio is enhanced by contacting a liquid containing a rejection performance enhancer with a semipermeable membrane, but since the permeation flux decreases accordingly, in order to prevent an excessive increase in the operation pressure due to permeation performance degradation while fully utilizing the rejection performance-enhancing effect, it is very important to monitor and control the water permeation performance and rejection performance before and after the rejection performance treatment.

Specifically, it is preferable to use a method where a liquid having the same components as the liquid containing the rejection performance enhancer except for not containing the rejection performance enhancer (a liquid containing a component different from the rejection performance enhancer) is passed through a reverse osmosis membrane at least before the rejection performance-enhancing treatment; at least two fluids out of feed water (feed water as a target of the treatment), permeate and concentrate are measured for the flow rate, concentration and water temperature at that time; the pure water permeation coefficient $A_0$ as the initial water permeation performance and the solute permeation coefficient $B_0$ as the rejection performance are calculated from the measured values; while feeding and passing the liquid containing the rejection performance enhancer to the reverse osmosis membrane, at least two fluids out of feed water, permeate and concentrate are measured for the flow rate, concentration and water temperature at that time; the pure water permeation coefficient $A_1$ as the initial water permeation performance and the solute permeation coefficient $B_1$ as the rejection performance are calculated from the measured values; in the case where $B_1/B_0$ is not more than a predetermined value $R_B$ when $A_1/A_0$ becomes $R_{A1}$ or less, the rejection performance-enhancing treatment is terminated; in the case where $B_1/B_0$ exceeds $R_B$, the rejection performance-enhancing treatment is continued; and at the point where $B_1/B_0$ becomes $R_B$ or less or $A_1/A_0$ is reduced to $R_{A2}$, the treatment is stopped.

More specifically, the rejection performance-enhancing treatment is preferably applied such that $R_{A1}$ is 0.9 or less, $R_{A2}$ is 0.7 or more, and $R_B$ is from 0.3 to 0.7.

It is preferable to use a method where a liquid having the same components as the liquid containing the rejection performance enhancer except for not containing the rejection performance enhancer is passed through a reverse osmosis membrane at least before the rejection performance-enhancing treatment; at least two fluids out of feed water, permeate and concentrate are measured for the flow rate, concentration and water temperature at that time; the pure water permeation coefficient $A_0$ as the initial water permeation performance and the solute permeation coefficient $B_0$ as the rejection performance are calculated from the measured values; while feeding and passing the liquid containing the rejection performance enhancer to the reverse osmosis membrane, at least two fluids out of feed water, permeate and concentrate are measured for the flow rate, concentration and water temperature at that time; the pure water permeation coefficient $A_1$ as the initial water permeation performance and the solute permeation coefficient $B_1$ as the rejection performance are calculated from the measured values; in the case where $B_1/B_0$ is not more than a predetermined value $R_B$ when $A_1/A_0$ becomes $R_{A1}$ or less, the rejection performance-enhancing treatment is terminated; in the case where $B_1/B_0$ exceeds $R_B$, the rejection performance-enhancing treatment is continued; and at the point where $B_1/B_0$ becomes $R_B$ or less or $A_1/A_0$ is reduced to $R_{A2}$, the treatment is stopped. More specifically, the rejection performance-enhancing treatment is preferably applied such that $R_{A1}$ is 0.9 or less, $R_{A2}$ is 0.7 or more, and $R_B$ is from 0.3 to 0.7.

Here, the pure water permeation coefficient and the solute permeation coefficient can be determined according to the following formulae:

$$Jv=A(\Delta P-\pi(Cm)) \qquad (1)$$

$$Js=B(Cm-Cp) \qquad (2)$$

$$(Cm-Cp)/(Cf-Cp)=\exp(Jv/k) \qquad (3)$$

$$Cp=Js/Jv \qquad (4)$$

$$A = \alpha \times A25 \times \mu25/\mu \qquad (5)$$

$$B = \beta \times B25 \times \mu25/\mu \times (273.15+T)/(298.15) \qquad (6)$$

Cf: feed water concentration [mg/l]
Cm: membrane surface concentration [mg/1]
Cp: permeate concentration [mg/l]
Js: solute permeation flux [kg/m$^2$/s]
Jv: pure water permeation flux [m$^3$/m$^2$/s]
k: substance transfer coefficient [m/s]
A: pure water permeation coefficient [m$^3$/m$^2$/Pa/s]
A25: pure water permeation coefficient at 25°C [m$^3$/m$^2$/pa/s]
B: solute permeation coefficient [m/s]
B25: solute permeation coefficient at 25°C [m$^3$/m$^2$/Pa/s]
T: temperature [°C]
$\alpha$: coefficient of variation by operation conditions [-]
$\beta$: coefficient of variation by operation conditions [-]
$\Delta$P: operation pressure [Pa]
$\mu$: viscosity [Pa·s]
$\mu$25: viscosity at 25°C [Pa·s]
$\pi$: osmotic pressure [Pa]

That is, Jv, Cf, Cp and T are measured, and k and other physical values are substituted into the formulae (1) to (4), whereby the pure water permeation coefficient A and solute permeation coefficient B under actual measurement conditions can be determined. Furthermore, based on the previously obtained $\alpha$ and $\beta$, the pure water permeation coefficient A25 and solute permeation coefficient B25 at 25°C can be determined according to formulae (5) and (6), and in addition, the pure water permeation coefficient and solute permeation coefficient at an arbitrary temperature T can also be obtained using formulae (5) and (6). In the case of calculating the performance of the semipermeable membrane element, it can be determined by performing numerical integration while calculating a mass balance in the length direction of the semipermeable element.

Details of this calculation method are described in non-patent document (M. Taniguchi, et al., "Behavior of a reverse osmosis plant adopting a brine conversion", Journal of Membrane Science, 183, pp. 249-257 (2000)).

In calculating and monitoring the pure water permeation coefficient A and solute permeation coefficient B, both are preferably values corrected to the same temperature, but it is very preferable to correct these coefficients to a value at a lowest operation temperature T$_L$ of the semipermeable membrane, which is a harshest environment for water permeability, i.e., at which the pure water permeation coefficient A most decreases, and a value at a highest operation temperature T$_H$ of the semipermeable membrane, which is a harshest environment for rejection performance, i.e., at which the solution permeation coefficient B becomes largest, because whether or not respective performances are within acceptable ranges is clearly known.

In the method of the present invention, in order to perform the treatment of contacting a rejection performance enhancer with a semipermeable membrane, there is, for example, a method where a liquid containing a rejection performance enhancer is passed through a pressure vessel in the state of a semipermeable membrane being loaded into the pressure vessel and contacted with the semipermeable membrane. In the case of having a facility for applying chemical cleaning in the state of a semipermeable membrane being loaded into a pressure vessel, a liquid containing a rejection performance enhancer is passed through a pressure vessel by using the cleaning facility and contacted with a semipermeable membrane, whereby the treatment can be performed.

The pressure at the time of performing the treatment of contacting a liquid containing a rejection performance enhancer with a composite semipermeable membrane is not particularly limited and may be appropriately determined by taking into account the pressure resistance of the semipermeable membrane, the rejection performance-enhancing effect, and the influence on water permeability. Among others, the pressure is preferably not more than the pressure at the time of fresh-water generation operation of passing water to be treated through a semipermeable membrane, and in the case of having the above-described chemical cleaning facility, the treatment is more preferably executed within the pressure range of the cleaning facility, because the rejection performance-enhancing treatment can be applied without providing an exclusive facility.

In performing the treatment of contacting a liquid containing a rejection performance enhancer with a semipermeable membrane, a preferred embodiment is to perform the treatment such that the permeation flux becomes from 0.01 to 2.0 m/day, because the rejection performance enhancer is likely to act even on the inside of the semipermeable membrane. If the permeation flux is less than 0.01 m/day, the treatment effect is low, and if it is more than 2.0 m/day, there may be a risk that the composite semipermeable membrane is damaged due to an excessive operation pressure.

The concentration of the rejection performance enhancer is not particularly limited, but if the concentration is too high, uniform rejection performance enhancement on the entire membrane may be less likely to be obtained, or since the rejection performance enhancer locally accumulates, local reduction in the water permeability tends to occur. On the contrary, if the concentration thereof is too low, this may disadvantageously cause a decrease in the speed of rejection performance enhancement and cause an increase in the treatment time. Specifically, according to the invention the concentration thereof is from 0.5 $\mu$mol/L to 100 $\mu$mol/ L, preferably from 1 $\mu$mol/L to 50 $\mu$mol/L.

Furthermore, in order to increase the treatment effect and time efficiency, the concentration can be gradually increased and decreased while monitoring the permeation flux during the rejection performance-enhancing treatment. Measuring the permeation flux during the treatment makes it possible to immediately increase or decrease the treatment concentration when the rejection performance-enhancing effect is not yielded due to too low concentration or when a uniform treatment is judged to be difficult due to too large effect per time, and this is effective particularly in performing the treatment on a large scale in a water treatment plant, etc. In addition, the speed of diffusion/contact into/with the semipermeable membrane can be increased by feeding the liquid containing the rejection performance enhancer after heating it, and this is also a preferred embodiment. Specifically, the heating temperature is preferably the highest operation temperature of the semipermeable membrane at the time of fresh water generation and from the viewpoint of preventing deterioration by heat of the semipermeable membrane, ranges from the highest operation temperature at the time of fresh water generation to 60°C, and the temperature is more preferably from 35 to 45°C.

The above-described constant X can thereby be made small. Specifically, relative to the value $X_1$ determined at the assumed temperature $T_1$°C in determining the constant X, when the temperature is raised by $\Delta T$°C (=$T_2$-$T_1$, $T_2$ is the rejection performance-enhancing treatment temperature), X corrected by $X_{1+\Delta T}=X_1/(1+a\times\Delta T)$, provided that $0.02\leq a\leq0.03$, can be applied.

In the present invention, it is also preferable to use, after the rejection performance-enhancing treatment, a method for making desorption of the treating agent from the semipermeable membrane difficult by the contact with high-temperature water. Specifically, the method may be a method of raising the ambient temperature but can be conducted by, after the rejection performance-enhancing treatment, causing feed water, concentrate or permeate at the time of fresh water generation or other water outside the system to run into the feed side of the semipermeable membrane at a temperature not less than the highest temperature during fresh water generation. The specific temperature is preferably not less than the highest temperature at the time of fresh-water generation operation (highest operation temperature), and from the viewpoint of preventing deterioration of the semipermeable membrane, is 60°C or less, more preferably from 35 to 45°C. The conditions here, such as flow rate and pH, are not particularly limited, but a mild level of flow rate or pH giving no adverse influence on the semipermeable membrane or on the result of the rejection performance-enhancing treatment is preferred. In addition, the pressure here is also preferably not more than the operation pressure at the time of fresh water generation.

Incidentally, as for the warm water used, the rejection performance-enhancing liquid may be heated and directly passed, but this requires an attention, because heating produces a treatment acceleration effect and compared with the case of not heating the liquid, the rejection performance-enhancing treatment must be completed early by heating and passing the liquid earlier than the completion of treatment.

The time for which the liquid containing the rejection performance enhancer is passed through may be appropriately determined in the present invention but is from 0.5 to 24 hours, preferably from 1 to 12 hours. If the treatment time is too short as above, a uniform treatment becomes difficult, and if the treatment time is too long, the operating time of the facility is disadvantageously lost.

In the case of performing the rejection performance-enhancing treatment, a longer sustaining recovery effect can be obtained by previously removing membrane-fouling substances on the semipermeable membrane surface before the contacting treatment. As the method for removing membrane-fouling substances, a chemical generally employed as a cleaning chemical for such a membrane can be used. For metals attached to the membrane surface, such as iron and manganese, cleaning with an acidic solution of citric acid, oxalic acid, hydrochloric acid, sulfuric acid, etc. is effective, and the cleaning effect can be increased by using the solution at a pH of 3 or less. In the case where an organic material or a microorganism is attached to the membrane surface, cleaning with an alkali solution of caustic soda, tetrasodium ethylenediamine tetraacetate is effective, and the cleaning effect can be increased by using the solution at a pH of 10 or more. The cleaning with such a cleaning chemical may be a method of cleaning the membrane by using respective chemicals individually or a method of cleaning the membrane by alternately using a plurality of chemicals.

In the rejection performance-enhancing method of the present invention, a rejection ratio improvement having a repeating effect on the same semipermeable membrane with the same water treatment facility is conducted, so that a constant removal ratio can be maintained for a long period of time by periodically conducting the treatment method of the present invention. In particular, the effect of improving the removal ratio of an uncharged substance is larger than that of an inorganic electrolyte for which an exclusion effect is provided by membrane charging. Examples of the uncharged substance include a non-electrolyte organic substance and a substance that is not dissociated in a neutral region (e.g., boron, silica). Since seawater or groundwater contains a high level of these substances, when the method of the present invention is applied to a desalination plant of treating such raw water, a more stable operation can be continued.

Furthermore, the rejection performance-enhancing treatment of the present invention enables restricting permeation of both a solvent and a solute through a semipermeable membrane, so that particularly when the semipermeable membrane is deteriorated and the permeation flux is increased, not only the rejection ratio is recovered but also a decline in permeate quality resulting from a decrease in the permeation flux and a consequent excessive decrease in the operation pressure for maintaining the amount of fresh water generated at design value can be prevented.

The rejection performance-enhancing method above is described with reference to applying the rejection performance-enhancing treatment in a desalination plant by taking, as an example, a case where the semipermeable membrane includes one unit, but there is no problem in applying the treatment in the state of a semipermeable membrane element and without limitation to only a semipermeable membrane after use, it is also a preferred embodiment to apply the treatment to a new semipermeable membrane immediately after the manufacture, or the treatment of the present invention may be applied in a desalination plant immediately after loading a new semipermeable membrane element on the plant. This makes it possible as well to obtain a semipermeable membrane element having a required rejection performance according to the needs, irrespective of the variety of semipermeable membrane.

In addition, there is no problem even if a plurality of semipermeable membrane units communicating with each other are present within a desalination plant, and in the case of having a plurality of semipermeable membrane units, the liquid containing the rejection performance enhancer discharged from a first semipermeable membrane unit can be used as the rejection performance enhancer in a second semipermeable membrane unit, or the treatment may be performed in parallel.

Fig. 4 illustrates an example of the former. In this case, when the rejection performance enhancer is enriched in a first (earlier-stage) semipermeable membrane unit 9a (that is, in the case of the enhancer H), since the concentration becomes high at the inlet of a second (later-stage) semipermeable membrane unit 9b, unless the rejection performance of particularly the second semipermeable membrane unit is wished to be increased, the discharged liquid is preferably diluted by means of a diluting water feed pump 22 from a diluting water tank 21. The diluting water here is not particularly limited, but dilution is preferably performed using, for example, feed water to the first semipermeable membrane during fresh water generation, concentrate (water discharged from a concentrate discharge line 11a), or permeate stored in a product water tank 12, and, for example, in the case where the fresh water generation facility includes a plurality of systems, it is also preferable to feed the diluting water from another system as illustrated in Figs. 5 and 6. In Fig. 5, another system includes a raw water line 1c, a raw water tank 2c, a raw-water feed pump 3c, a pretreatment unit 4c, an intermediate water tank 5c, a feed pump 6c, a safety filter 7c, a booster pump 8c, a semipermeable membrane unit 9c, a concentrate line 11, a concentrate valve 18c, a valve 17c, and a valve 18d. In Fig. 6, another system includes a raw water line 1c, a raw water tank 2c, a raw-water feed pump 3c, a pretreatment unit 4c, an intermediate water tank 5c, a feed pump 6c, a safety filter 7c, a booster pump 8c, a semipermeable membrane unit 9c, a concentrate line 11, a concentrate valve 18c, and a valve 18d. Here, the valve 17c enables feeding permeate of the semipermeable membrane unit 9c to a chemical tank 15, if desired, when, for example, the chemical fed from a chemical dosing unit 20a or 20b is at a high concentration or when the concentration is wished to be decreased while circulating the chemical. Fig. 6 is an example of using concentrate of the semipermeable membrane unit 9c as the diluting water, and the feed quantity thereof to the diluting water tank 21 can be adjusted by controlling the concentrate valve 18c and the valve 18d.

In the case of adding diluting water, the treatment may be performed to satisfy the condition of, instead of C described above, $C'=C \times Q_{FT}/(Q_{FT}+Q_{F+})$, provided that $Q_{F+}$ is the flow rate of diluting water [m$^3$/day].

In the case where the rejection performance enhancer can be almost completely removed by a semipermeable membrane, it is also possible to perform the performance-enhancing treatment while generating fresh water with the semipermeable membrane. More specifically, raw water to be treated is pretreated, and a rejection performance enhancer is added to the pretreated water, whereby the treatment and fresh water generation can be simultaneously performed. In particular, for the reason that the treatment is conducted while performing the fresh-water generation operation and in turn, the operation pressure for fresh water generation, the amount of fresh water generated, and the permeate quality can be monitored in real time, this method is very preferred in view of control. For example, a method of adding a rejection performance enhancer when the permeate quality, rejection ratio or solute permeation coefficient becomes worse than the set concentration, and stopping the addition thereof when the rejection performance is settled to an acceptable value, can be used. Therefore, the method described above is a very preferred embodiment.

However, in this case, if the worst happens, a risk of mixing of the rejection performance enhancer in the product water is created, and it is therefore required to take a countermeasure, for example, to provide a process of further treating the permeate for preventing mixing of the rejection performance enhancer in the product water, to use a rejection performance enhancer of which safety in the application has been confirmed, or to promptly stop fresh water generation by strictly monitoring the concentration of a rejection performance enhancer in the permeate.

A water treatment method using a semipermeable membrane treated by the above-described rejection performance-enhancing method makes it possible to prevent degradation of the permeate quality, obtain a good permeate quality for a long period time and in turn, extend the life of semipermeable membrane and greatly contribute to reduction in the cost for fresh water generation.

Fig. 7 is an example of the representative semipermeable membrane process to which the present invention can be applied. Fig. 8 is an example illustrating a method for performing a rejection performance-enhancing method by arranging a plurality of semipermeable membranes in series and using a second semipermeable membrane concentrate, in which the system includes a raw water line 1, a raw water tank 2, a raw-water feed pump 3, a pretreatment unit 4, an intermediate water tank 5, a feed pump 6, a safety filter 7, a booster pump 8a, a first semipermeable membrane unit 9a, a concentrate line 11, a concentrate valve 18a, an intermediate water tank 5b for storing the permeate of the first semipermeable membrane unit 9a, a booster pump 8b for boosting and feeding to a second semipermeable membrane, a second semipermeable membrane unit 9b, a second permeate line 10c, a second concentrate circulation line 11c, a concentrate line 11d for delivering concentrate to a chemical tank 15, and a valve 17c and a valve 17d for controlling respective flow rates. Incidentally, the second concentrate is linked to a concentrate discharge line or a chemical tank, but a line for discharging the concentrate outside the system may also be provided, and other portions are not limited as well particularly to those in Fig. 8. Fig. 9 illustrates one example of a case of feeding a part of first permeate to a chemical tank. In this example, similarly to Fig. 8, a first permeate can be fed to the chemical tank by controlling a valve 17c and a valve 17d. Fig. 9 is a case of using the permeate of a first semipermeable membrane unit for dilution of the chemical, but it is also possible to apply the permeate of a second semipermeable membrane unit in place of the permeate of the first semipermeable membrane unit.

EXAMPLES

The present invention is described in greater detail below by referring to Examples. However, the present invention is not limited to these Examples but is as defined in the appended claims.

<Preparation of Simulated Raw Water>

In implementing the preparation, the total salt concentration in permeate and feed water was determined by measuring electric conductivity of each liquid by means of an electric conductivity meter and in accordance with the relational expression of a simulated seawater concentration with an electric conductivity previously measured on simulated seawater. The simulated seawater as used herein means a liquid prepared by blending the components in a ratio of NaCl=23.926g/l, $Na_2SO_4$=4.006g/l, KCl=0.738g/l, $NaHCO_3$=0.196g/l, $MgCl_2$=5.072g/l, $CaCl_2$=1.147g/l and $H_3BO_3$=0.0286g/l, and the total salt concentration when prepared at this concentration becomes 3.5 wt%.

<Determination of Constant X>

Using the flat-sheet membrane evaluation apparatus described in Non-Patent Document 2, an aromatic polyamide reverse osmosis membrane with an NaCl rejection ratio of about 99.8%, creating a permeation flux of about 1.0 [m/day] upon circulation, pressurization and permeation of an aqueous solution of 32,000 [mg/l-NaCl], 25°C and pH=7 at 55 [bar] and a feed flow rate of 3.5 [L/min], was immersed in an aqueous hypochlorous acid solution, and the rejection ratio was thereby reduced to about 99.4%. This membrane was subjected to circulation treatment with a liquid in which 2 $\mu$mol/L of polyethylene glycol having a weight average molecular weight of 8,000 was added as a rejection performance enhancer, at a flow rate of 3.5 L, 25°C and a pressure of 4.5 bar by using the same flat-sheet membrane evaluation apparatus.

At this time, all of the permeate and the concentrate were cyclically utilized. After the treatment, an aqueous solution of 32,000 [mg/l-NaCl], 25°C and pH=7 was again subjected to circulation, pressurization and permeation at 55 [bar] and a feed flow rate of 3.5 [L/min], and the performance was measured to calculate a rejection performance improvement ratio [=(initial NaCl rejection ratio - NaCl rejection ratio after deterioration)/(initial NaCl rejection ratio - NaCl rejection ratio after treatment)]. That is, here, the initial NaCl rejection ratio is the target rejection ratio $R_0$. The permeation flux F after the treatment and the treatment time-dependent change of the NaCl rejection ratio R were measured, as a result, the improvement ratio exceeded 2 in 46 minutes and since $F_2/F_0$=0.74 at that time, the constant was determined to be X=0.77.

<Measurement of Effect of Rejection Performance-Enhancing Treatment>

The apparatus was operated in such a manner that, as illustrated in Fig. 10, simulated raw water prepared at a TDS concentration $C_F$ [mg/L] in a raw water tank 2 was used, subjected to ultrafiltration through a UF membrane module manufactured by Toray Industries, Inc. as a pretreatment unit 4 so as to prevent fouling of the semipermeable membrane, routed through a safety filter 7 by a feed pump 6 and fed to semipermeable membrane units 9a and 9b by a booster pump 8a and the obtained concentrate and permeate were totally refluxed to the raw water tank through a circulation line 11c. The semipermeable membrane units 9a and 9b each was loaded with one reverse osmosis membrane element TM810V manufactured by Toray Industries, Inc. and operated at an operation pressure of $P_F$ [bar], a feed flow rate of 36 [m$^3$/day] and a temperature of 25 [°C], and the permeation flow rate $Q_{P0}$ [m$^3$/day] and the permeate TDS concentration $C_{P0}$ [mg/L] were measured.

At this time, the permeate valve 17a, the valve 17c, the valve 17d and the valve 16c in Fig. 10 were fully opened, the valve 18c, the valve 16d, the permeate discharge valve 25 connected to the permeate discharge line 24, and the concentrate discharge valve 27 connected to the concentrate discharge line 26 were fully closed, and the flow rate was adjusted by controlling the concentrate valve 18a. Subsequently, the semipermeable membrane was forcedly deteriorated by adding sodium hypochlorite to the pretreatment tank to make 10 mg/l, and the permeation flow rate $Q_{P1}$ [m$^3$/day] and the permeate TDS concentration $C_{P1}$ [mg/L] were again measured using simulated raw water at the same concentration under the same operation conditions. Furthermore, after loading the semipermeable membrane unit 9a with one reverse osmosis membrane element, emptying the semipermeable membrane unit 9b, fully opening the permeate valve 17a and fully closing the permeate valve 17b, the front and rear elements were measured under the same conditions for the permeation flow rate and the permeate TDS concentration, i.e., $Q_{P11}$ [m$^3$/day], $Q_{P12}$ [m$^3$/day], $C_{P11}$ [mg/L] and $C_{P12}$ [mg/L].

Then, the concentration in the raw water tank 2 was adjusted to $C_{FT}$ [mg/L] and after adding polyethylene glycol having a weight average molecular weight of 8,000 to the raw water tank 2 to a concentration C=15 mg/L, a rejection performance-enhancing treatment was conducted for the time t by pressurization and circulation at a feed flow rate of $Q_{FT}$ [m$^3$/day] and a penetration flow rate of $Q_{PT}$ [m$^3$/day]. Thereafter, the permeation flow rate $Q_{P2}$ [m$^3$/day] and the permeate TDS concentration $C_{P2}$ [mg/L] were again measured using the same simulated raw water as that in the first measurement under the same operation conditions.

Furthermore, after loading each of the units with one reverse osmosis membrane element, the front and rear elements were measured under the same conditions for the permeation flow rate and the permeate TDS concentration, i.e., $Q_{P21}$ [m$^3$/day], $Q_{P22}$ [m$^3$/day], $C_{P21}$ [mg/L] and $C_{P22}$ [mg/L]. Here, in replacing the raw water or chemical treatment, pure water was put in the raw water tank or the chemical tank, and flushing was performed for a few minutes while fully opening the permeate discharge valve 25 and the concentrate discharge valve 27 and fully closing the valve 17a, the valve 17d and the valve 18c in order for the influence of previous raw water or chemical not to affect the next evaluation.

<Examples 1 and 2 and Comparative Examples 1 and 2>

Test results at $C_F$=1,000 mg/L (osmotic pressure $\pi$=0.8 bar):
In Comparative Example 1 where $Q_{PT}/A \times C \times t$=0.64 (<X), the rejection performance enhancement ratio was $R_{IM}$=1.08, revealing that the enhancement ratio is insufficient. In Comparative Example 2, the treatment was applied for a longer time than in Example 2, and $Q_P/A \times C \times t$=1.13 (>1.4X) was obtained, but $R_{IM}$ was not enhanced, compared with Example 2.

<Examples 3 and 4 and Comparative Examples 3 and 4>

Test results at $C_F$=10,000 mg/L (osmotic pressure $\pi$=7.0 bar):
In Comparative Example 3 where $Q_P/A \times C \times t$=0.50 (<0.8X), the rejection performance enhancement ratio was $R_{IM}$=1.56, revealing that the enhancement ratio is insufficient. In Comparative Example 4, the treatment was applied for a longer time than in Example 4, and $Q_P/A \times C \times t$=1.00 (>1.2X) was obtained, but $R_{IM}$ was not so much enhanced, compared with Example 4.

<Examples 5 and 6 and Comparative Examples 5 and 6>

Test results at $C_F$=35,000 mg/L (osmotic pressure $\pi$=24.1 bar):
In Comparative Example 5 where $Q_P/A \times C \times t$=0.25 (<0.6X), the rejection performance enhancement ratio was $R_{IM}$=1.46, revealing that the enhancement ratio is insufficient. In Comparative Example 6, the treatment was applied for a longer time than in Example 6, and $Q_P/A \times C \times t$=1.00 (>X) was obtained, but $R_{IM}$ was not so much enhanced, compared with Example 6.

<Examples 7, 8 and 9>

$C_F$=1,000 mg/L: Comparison results of added water dilution (=addition of 1.0 m$^3$/d) between first (front) and second (rear) semipermeable membrane elements:

Here, in the case of added water dilution in the middle, when an added water dilution treatment was performed between the semipermeable membrane units 9a and 9b in Fig. 10, the treatment was performed by fully closing the valve 16c, instead fully opening the valve 16d and the valve 18c and after diluting from the diluting water line 23 and mixing and diluting in the intermediate water tank 5b, again boosting the pressure to the same pressure as that of the concentrate of the semipermeable membrane unit 9a by the booster pump 8b.

In Example 7 where dilution was not performed, the entire permeate quality after the treatment was $C_{P2}$=95 mg/l and $R_{IM}$=3.55, and the enhancement ratio was sufficient. However, while the rejection performance enhancement ratio was 3.55 and was sufficient, the permeate quality when measured with one front element was $CP_{21}$=91 mg/L, and the permeate quality when measured with one rear element was $C_{P22}$=74 mg/L, revealing that the treatment with the front element was greatly inferior.

On the other hand, in Example 8, the permeate quality after treatment including dilution was $C_{P2}$=105 mg/L and $R_{IM}$=2.17, and the enhancement ratio was sufficient, but there was a slight decline in permeate quality from that in Example 7. However, the permeate quality of the front element was $C_{P21}$=91 mg/L, and the permeate quality of the rear element was $C_{P22}$=90 mg/L, revealing that the rejection performance enhancement was equivalent.

In Example 9, the treatment time was increased to 35 minutes, as a result, not only the permeate quality was $C_{P2}$=97 mg/L and $R_{IM}$=3.21 and the enhancement ratio was sufficient but also the permeate quality of the front element was $C_{P21}$=79 mg/L and the permeate quality of the rear element was $C_{P22}$=81 mg/L, revealing that the rejection performance enhancement was equivalent.

<Example 10>

Test results at $C_F$=35,000 mg/L:
The treatment was performed under the same conditions as in Example 5 except that the treated water temperature was raised to 40°C and the treatment time was decreased to 5 minutes from 6 minutes, as a result, in Example 5, $C_{P2}$=96 mg/L and $R_{IM}$=3.38, and in Example 10, $C_{P2}$=94 mg/L and $R_{IM}$=3.75, revealing that a high treatment efficiency could be achieved in a shorter time.

<Example 11>

Pressure reduction for 15 seconds was pulsedly performed twice every 10 minutes after a continuing treatment time of 30 minutes (i.e., total treatment time including pressure reduction: 30 minutes and 30 seconds). The pressure fluctuation rate here was 0.06 MPa/s. Except for these, the treatment was performed in the same manner as in Example 2, as a result, in Example 2, $C_{P2}$=2.7 mg/L, $R_{IM}$=2.33 and $Q_{P2}$=8.25 m$^3$/d, and in Example 11, $C_{P2}$=2.8 mg/L, $R_{IM}$=2.14 and $Q_{P2}$=8.66 m$^3$/d, revealing that reduction in the water permeation performance could be suppressed while achieving an almost equivalent rejection performance improvement.

<Example 12>

Pressure reduction for 15 seconds was pulsedly performed twice every 5 minutes after a continuing treatment time of 15 minutes (i.e., total treatment time including pressure reduction: 15 minutes and 30 seconds). The pressure fluctuation rate here was 0.06 MPa/s. Except for these, the treatment was performed in the same manner as in Example 4, as a result, in Example 4, $C_{P2}$=25.0 mg/L, $R_{IM}$=3.98 and $Q_{P2}$=8.82 m$^3$/d, and in Example 12, $C_{P2}$=25.8 mg/L, $R_{IM}$=3.40 and $Q_{P2}$=9.53 m$^3$/d, revealing that reduction in the water permeation performance could be suppressed while achieving an almost equivalent rejection performance improvement.

<Example 13>

Pressure reduction for 15 seconds was pulsedly performed twice every 3 minutes after a continuing treatment time of 9 minutes (i.e., total treatment time including pressure reduction: 9 minutes and 30 seconds). The pressure fluctuation rate here was 0.06 MPa/s. Except for these, the treatment was performed in the same manner as in Example 6, as a result, in Example 6, $C_{P2}$=93.0 mg/L, $R_{IM}$=4.15 and $Q_{P2}$=7.70 m$^3$/d, and in Example 13, $C_{P2}$=94 mg/L, $R_{IM}$=3.86 and $Q_{P2}$=8.16 m$^3$/d, revealing that reduction in the water permeation performance could be suppressed while achieving an almost equivalent rejection performance improvement.

<Example 14>

The treatment was performed in the same manner as in Example 11 except that simultaneously with pressure reduction for 15 seconds, the permeate valves 17a and 17b were fully closed not to allow water to flow out, as a result, in Example 11, $C_{P2}$=2.8 mg/L, $R_{IM}$=2.14 and $Q_{P2}$=8.66 m$^3$/d, and in Example 14, $C_{P2}$=2.7 mg/L, $R_{IM}$=2.28 and $Q_{P2}$=8.99 m$^3$/d, revealing that reduction in the water permeation performance could be suppressed while achieving an almost equivalent rejection performance improvement.

<Example 15>

The treatment was performed in the same manner as in Example 11 except that the flow into the semipermeable membrane unit was reversed by changing the connection of the feed pipeline with the permeation pipeline immediately before pressure reduction for 15 seconds, as a result, in Example 11, $C_{P2}$=2.8 mg/L, $R_{IM}$=2.14 and $Q_{P2}$=8.66 m$^3$/d, and in Example 15, $C_{P2}$=2.7 mg/L, $R_{IM}$=2.28 and $Q_{P2}$=8.99m$^3$/d, revealing that reduction in the water permeation performance could be suppressed while achieving an almost equivalent rejection performance improvement.

The results of Examples and Comparative Examples are shown together in the Tables below. The Table is large and therefore, divided into Table 1 and Table 2 but is one Table.

Table 1

| | Temperature | $Q_F$ [m$^3$/d] | Performance Evaluation Conditions | | | Initial Performance | | Performance After Deterioration | |
|---|---|---|---|---|---|---|---|---|---|
| | | | $C_F$ [mg/L] | $\pi$ [bar] | $P_F$ [bar] | $Q_{P0}$ [m$^3$/d] | $C_{P0}$ [mg/L] | $Q_{P1}$ [m$^3$/d] | $C_{P1}$ [mg/L] |
| Comp. Ex. 1 | 25 | 36 | 1000 | 0.8 | 20 | 8.9 | 2.1 | 10.6 | 3.5 |
| Ex. 1 | | | | | | | 2.1 | 10.6 | 3.5 |
| Ex. 2 | | | | | | | 2.1 | 10.6 | 3.5 |
| Comp. Ex. 2 | | | | | | | 2.1 | 10.6 | 3.5 |
| Comp. Ex. 3 | | | 10000 | 7.0 | 30 | 9.41 | 20.6 | 11.4 | 38.1 |
| Ex. 3 | | | | | | | 20.6 | 11.4 | 38.1 |
| Ex. 4 | | | | | | | 20.6 | 11.4 | 38.1 |
| Comp. Ex. 4 | | | | | | | 20.6 | 11.4 | 38.1 |
| Comp. Ex. 5 | | | 35000 | 24.1 | 50 | 8.0 | 80 | 8.63 | 134 |
| Ex. 5 | | | | | | | 80 | 8.63 | 134 |
| Ex. 6 | | | | | | | 80 | 8.63 | 134 |
| Comp. Ex. 6 | | | | | | | 80 | 8.63 | 134 |
| Ex. 7 | | | | | | | 80 | 8.63 | 134 |
| Ex. 8 | | | | | | | 80 | 8.63 | 134 |
| Ex. 9 | | | | | | | 80 | 8.63 | 134 |
| Ex. 10 | | | | | | | 80 | 8.63 | 134 |
| Ex. 11 | | | 1000 | 0.8 | 20 | 8.9 | 2.1 | 10.6 | 3.5 |
| Ex. 12 | | | 10000 | 7.7 | 30 | 9.41 | 20.6 | 11.4 | 38.1 |
| Ex. 13 | | | 35000 | 27.0 | 50 | 8 | 80 | 8.63 | 134 |
| Ex. 14 | | | 1000 | 0.8 | 20 | 8.9 | 2.1 | 10.6 | 3.5 |
| Ex. 15 | | | 1000 | 0.8 | 20 | 8.9 | 2.1 | 10.6 | 3.5 |

Table 1 (continued)

| | Front Element | | Rear Element | | Feed Quantity | Permeate Quantity | Temperature | Treatment Pressure |
|---|---|---|---|---|---|---|---|---|
| | $Q_{P11}$ [$m^3/d$] | $C_{P11}$ [mg/L] | $Q_{P12}$ [$m^3/d$] | $C_{P12}$ [mg/L] | $Q_{FT}$ [$m^3/d$] | $Q_{PT}$ [$m^3/d$] | $T_2$ [°C] | P [bar] |
| Comp. Ex. 1 | 5.6 | 3.3 | 5.46 | 3.1 | 12.5 | 1.99 | 25 | 4.5 |
| Ex. 1 | | | 5.46 | | | | | |
| Ex. 2 | | | 5.46 | | | | | |
| Comp. Ex. 2 | | | 5.46 | | | | | |
| Comp. Ex. 3 | 6.08 | 34.3 | 5.94 | 31.5 | | 3.42 | | 16.0 |
| Ex. 3 | | | 5.94 | | | | | |
| Ex. 4 | | | 5.94 | | | | | |
| Comp. Ex. 4 | | | 5.94 | | | | | |
| Comp. Ex. 5 | 5.0 | 131 | 4.7 | 97 | | 5.14 | | 52.4 |
| Ex. 5 | | | 4.7 | | | | | |
| Ex. 6 | | | 4.7 | | | | | |
| Comp. Ex. 6 | | | 4.7 | | | 1.94 | | 4.5 |
| Ex. 7 | | | 4.7 | | | | | |
| Ex. 8 | | | 4.7 | | | | | |
| Ex. 9 | | | 4.7 | | | | | |
| Ex. 10 | | | 4.7 | | | 5.14 | 40 | 52.4 |
| Ex. 11 | 5.55 | 3.3 | 5.46 | 3.1 | | 1.99 | 25 | 4.5 |
| Ex. 12 | 6.08 | 34.3 | 5.94 | 33.5 | | 3.415 | | 16 |
| Ex. 13 | 5 | 131 | 4.7 | 97 | | 5.14 | | 52.4 |
| Ex. 14 | 5.55 | 3.3 | 5.46 | 3.1 | | 1.99 | | 4.5 |
| Ex. 15 | 5.55 | 3.3 | 5.46 | 3.1 | | 1.99 | | 4.5 |

Table 2

| | Treating Agent Concentration | Solute Concentration | Treatment Time | Pulsed Pressure | Frequency | $Q_P/A×C×t$ | $Q_P/Q_F$ |
|---|---|---|---|---|---|---|---|
| | C [mg/L] | $C_T$ [mg/L] | t [min] | [bar] | [sec/min] | | |
| Comp. Ex. 1 | 15 | 1000 | 20 | none | none | 0.64 | 0.159 |
| Ex. 1 | | | 25 | | | 0.81 | |
| Ex. 2 | | | 30 | | | 0.97 | |
| Comp. Ex. 2 | | | 35 | | | 1.13 | |
| Comp. Ex. 3 | | 10000 | 9 | | | 0.50 | 0.273 |
| Ex. 3 | | | 12 | | | 0.66 | |
| Ex. 4 | | | 15 | | | 0.83 | |
| Comp. Ex. 4 | | | 18 | | | 1.00 | |
| Comp. Ex. 5 | | 35000 | 3 | | | 0.25 | 0.411 |
| Ex. 5 | | | 6 | | | 0.50 | |
| Ex. 6 | | | 9 | | | 0.75 | |
| Comp. Ex. 6 | | | 12 | | | 1.00 | |
| Ex. 7 | | 1000 | 30 | | | 0.94 | 0.155 |
| Ex. 8 | | | 30 | | | 0.94 | |
| Ex. 9 | 13.9 | | 35 | | | 1.02 | |
| Ex. 10 | 15 | 35000 | 5 | | | 0.42 | 0.411 |
| Ex. 11 | 15 | 1000 | 30 | 3 | 15/10 | 0.97 | 0.159 |
| Ex. 12 | | 10000 | 15 | 10 | 15/5 | 0.00 | 0.273 |
| Ex. 13 | | 35000 | 9 | 30 | 15/3 | 0.00 | 0.411 |
| Ex. 14 | | 1000 | 30 | 3 | 15/10 | 0.00 | 0.159 |
| Ex. 15 | | 1000 | 30 | 3 | 15/10 | 0.00 | 0.159 |

Table 2 (continued)

| | Performance After Treatment | | Enhancement ratio $R_{IM}$ | Front Element | | Rear Element | |
|---|---|---|---|---|---|---|---|
| | $Q_{P2}$ [m³/d] | $C_{P2}$ [mg/L] | | $Q_{P21}$ [m³/d] | $C_{P21}$ [mg/L] | $Q_{P22}$ [m³/d] | $C_{P22}$ [mg/L] |
| Comp. Ex. 1 | 9.4 | 3.4 | 1.08 | | | | |
| Ex. 1 | 8.8 | 2.8 | 2.00 | 4.6 | 2.6 | 4.5 | 2.5 |
| Ex. 2 | 8.3 | 2.7 | 2.33 | | | | |
| Comp. Ex. 2 | 8.1 | 2.7 | 2.33 | | | | |
| Comp. Ex. 3 | 9.8 | 31.8 | 1.56 | | | | |
| Ex. 3 | 9.2 | 25.6 | 3.50 | 5.0 | 23.0 | 4.7 | 21.8 |
| Ex. 4 | 8.8 | 25.0 | 3.98 | | | | |
| Comp. Ex. 4 | 8.7 | 24.8 | 4.17 | | | | |
| Comp. Ex. 5 | 8.1 | 117.0 | 1.46 | | | | |
| Ex. 5 | 7.8 | 96.0 | 3.38 | 4.3 | 85.6 | 4.3 | 79.4 |
| Ex. 6 | 7.7 | 93.0 | 4.15 | | | | |
| Comp. Ex. 6 | 7.6 | 93.0 | 4.15 | | | | |
| Ex. 7 | 7.7 | 95.2 | 3.55 | 4.6 | 90.7 | 3.9 | 74.4 |
| Ex. 8 | 7.8 | 104.9 | 2.17 | 4.6 | 90.7 | 4.6 | 90.7 |
| Ex. 9 | 7.7 | 96.8 | 3.21 | 4.3 | 80.2 | 4.3 | 80.2 |
| Ex. 10 | 7.8 | 94.4 | 3.75 | 4.3 | 84.2 | 4.3 | 78.1 |
| Ex. 11 | 8.7 | 2.8 | 2.14 | | | | |
| Ex. 12 | 9.5 | 25.8 | 3.40 | | | | |
| Ex. 13 | 8.2 | 94 | 3.86 | | | | |
| Ex. 14 | 9.0 | 2.7 | 2.28 | | | | |
| Ex. 15 | 9.1 | 2.7 | 2.23 | | | | |

INDUSTRIAL APPLICABILITY

The present invention provides a rejection performance-enhancing method for maintaining and enhancing the performance of a semipermeable membrane used for obtaining low-concentration permeate by using raw water such as seawater, saline river water, groundwater, lake water and treated wastewater, and this method makes it possible to increase the life of a semipermeable membrane and efficiently produce fresh water at low cost.

DESCRIPTION OF REFERENCE NUMERALS AND SIGNS

1:      Raw water line
2:      Raw water tank
3:      Raw water feed pump
4:      Pretreatment unit
5:      Intermediate water tank
6:      Feed pump
7:      Safety filter
8:      Booster pump
9:      Semipermeable membrane unit
10:     Permeate line
11:     Concentrate line
11a:    Concentrate discharge line
11b:    Concentrated chemical line
11c:    Circulation line
11d:    Concentrate line
12:     Product water tank
13:     Energy recovery unit
14:     Chemical feed line
15:     Chemical tank
16a:    Feed water valve
16b:    Feed chemical valve
16c:    Valve
16d:    Valve
17a:    Permeate valve

17b: Permeated chemical valve
17c: Valve
17d: Valve
18a: Concentrate valve
18b: Concentrated chemical valve
18c: Concentrate valve
18d: Valve
19: Chemical feed pump
20: Chemical dosing unit
21: Diluting water tank
22: Diluting water feed pump
23: Diluting water line
24: Permeate discharge line
25: Permeate discharge valve
26: Concentrate discharge line
27: Concentrate discharge valve
28a: Valve
28b: Valve

**Claims**

1. A semipermeable membrane rejection performance-enhancing method which is a method of enhancing a rejection performance of a semipermeable membrane by pressurizing and feeding a liquid containing a rejection performance enhancer at a concentration of from 0.5 $\mu$mol/L to 100 $\mu$mol/L, wherein the rejection performance enhancer is a vinyl-based polymer selected from polyvinyl acetate, polyvinyl alcohol, a vinyl acetate-ethylene copolymer, a vinyl chloride copolymer, a styrene-vinyl acetate copolymer, and an N-vinylpyrrolidone-vinyl acetate copolymer or a compound having a polyalkylene glycol chain, wherein the polyalkylene glycol chain includes a polyethylene glycol chain, a polypropylene glycol chain, a polytrimethylene glycol chain, and a polytetramethylene glycol chain, and is to be contacted with the semipermeable membrane to enhance the rejection performance thereof to a primary side of the semipermeable membrane to come into contact with a membrane surface thereof, the method comprising: a step of changing, at least once during the feeding, a pressure at a fluctuation rate of 0.05 MPa/s or more, thereby changing at least either a pressure acting on the membrane surface or a permeation flow rate from that at the time of normal treatment, followed by maintaining the changed pressure or permeation flow rate,

   wherein a time for which the pressure or the permeation flow rate is maintained is from 10 seconds to 10 minutes, and
   wherein the liquid containing the rejection performance enhancer contains a solute different from the rejection performance enhancer, and when a constant X is determined according to the kind of the rejection performance enhancer and a quantity of the liquid containing the rejection performance enhancer fed to the semipermeable membrane is denoted as $Q_{FT}$ [m$^3$/day], a quantity of the liquid containing the rejection performance enhancer permeated through the semipermeable membrane is denoted as $Q_{PT}$ [m$^3$/day], a membrane area of the semipermeable membrane is denoted as A [m$^2$], a rejection performance enhancer concentration is denoted as C [mg/l], a liquid transit time is denoted as t [h], and an osmotic pressure of the fed liquid is denoted as $\pi$, the treatment is applied to satisfy:

$$1.0X \leq Q_{PT}/A \times C \times t \leq 1.4X$$

   and

$$0.02 \leq Q_{PT}/Q_{FT} \leq 0.2$$

   in the case where the osmotic pressure $\pi$ is less than 1 bar;

$$0.8X \leq Q_{PT}/A \times C \times t \leq 1.2X$$

and

$$0.2 \leq Q_{PT}/Q_{FT} \leq 0.4$$

in the case where the osmotic pressure $\pi$ is 1 bar or more and less than 20 bar; and

$$0.6X \leq Q_{PT}/A \times C \times t \leq 1.0X$$

and

$$0.3 \leq Q_{PT}/Q_{FT} \leq 0.5$$

in the case where the osmotic pressure $\pi$ is 20 bar or more and 40 bar or less,
wherein the transit time t [h] is the time for which the liquid containing the rejection performance enhancer is passed through and is from 0.5 to 24 hours, and
wherein X is determined as follows:

a treatment liquid is prepared by dissolving 500 mg/L of NaCl in 100 L of pure water, a semipermeable membrane as a target of treatment is set in a flat-sheet membrane cell described in "M. Taniguchi, et al., "Boron Reduction performance of reverse osmosis seawater desalination process", Journal of Membrane Science, 183, 259-267 (2001)", and
the initial performance of the semipermeable membrane is measured by circulating the treatment liquid at a flow rate of 3.5 L, 25°C and a pressure of 4.5 bar, wherein all of the permeate and the concentrate are cyclically utilized; and at this time, the permeation flux F, which is the permeate quantity per membrane area and the NaCl rejection performance R, which is $100-100 \times NaCl$ concentration of permeate per NaCl concentration of treatment liquid are measured to obtain $R_0$ as the target rejection performance and $F_1$ and $R_1$ as the initial performance, and subsequently, 2 $\mu$mol/L of the rejection performance enhancer is added as the rejection performance-enhancing treatment, and after treating for a set time, temporal changes of permeation flux $F_2$ and NaCl rejection performance $R_2$ are measured and the time [h] until the rejection performance improvement ratio $R_{IM}=(R_0-R_1)/(R_0-R_2)=(C_{P0}-C_{P1})/(C_{P0}-C_{P2})$ exceeds 2 is measured, wherein this time is taken as X.

2. The semipermeable membrane rejection performance-enhancing method according to claim 1, wherein the permeation flow rate is fluctuated to 0.8 times or less or 1.2 times or more the permeation flow rate at the time of normal treatment, at least once during the feeding.

3. The semipermeable membrane rejection performance-enhancing method according to claim 1 or 2, wherein the change of the permeation flow rate is caused by a pressure change at least on the primary side or a secondary side of the semipermeable membrane.

4. The semipermeable membrane rejection performance-enhancing method according to any one of claims 1 to 3, wherein the permeation flow rate is set to 0.1 times or less the permeation flow rate at the time of normal treatment.

5. The semipermeable membrane rejection performance-enhancing method according to any one of claims 1 to 4, wherein a feed direction to the semipermeable membrane is reversed at least once

6. The semipermeable membrane rejection performance-enhancing method according to any one of claims 1 to 5, wherein the rejection performance enhancer is diluted by at least one fluid of feed water which is a target of semipermeable membrane treatment, concentrate and permeate thereof.

7. The semipermeable membrane rejection performance-enhancing method according to any one of claims 1 to 6, wherein the primary side of the semipermeable membrane is constituted by multi-stage units communicating with each other, and at the time of diluting the liquid containing the rejection performance enhancer discharged from the primary side of an earlier-stage semipermeable membrane and feeding the liquid to a later-stage semipermeable membrane unit, diluting water is mixed.

8. The semipermeable membrane rejection performance-enhancing method according to claim 7, wherein the diluting water contains at least permeate of the semipermeable membrane or feed water which is a target of semipermeable membrane treatment.

9. The semipermeable membrane rejection performance-enhancing method according to any one of claims 1 to 8, wherein the liquid containing the rejection performance enhancer is fed after heating at a temperature ranging from the highest operation temperature at the time of fresh water generation to 60°C.

10. The semipermeable membrane rejection performance-enhancing method according to claim any of claims 1 to 6, wherein when an assumed temperature for determining the constant X is denoted as $T_1°C$, a constant determined therefrom is denoted as $X_1$, and a rejection performance-enhancing treatment temperature is denoted as $T_2$,

$$X=X_1/\{1+a\times(T_2-T_1)\}$$

provided that a is a constant satisfying $0.02 \leq a \leq 0.03$.

11. The semipermeable membrane rejection performance-enhancing method according to any one of claims 1 to 10, wherein the semipermeable membrane is heated after pressurizing and feeding the liquid containing the rejection performance enhancer thereto.

12. The semipermeable membrane rejection performance-enhancing method according to claim 11, wherein heating of the semipermeable membrane is performed by feeding and passing high-temperature water.

**Patentansprüche**

1. Verfahren zur Verbesserung der Abstoßungsleistung einer semipermeablen Membran, das ein Verfahren zur Verbesserung der Abstoßungsleistung einer semipermeablen Membran durch Unterdrucksetzen und Zuführen einer Flüssigkeit, die einen Abstoßungsleistungsverstärker in einer Konzentration von 0,5 $\mu$mol/l bis 100 $\mu$mol/l enthält, wobei der Abstoßungsleistungsverstärker ein Polymer auf Vinylbasis ist, ausgewählt aus Polyvinylacetat, Polyvinylalkohol, einem Vinylacetat-Ethylen-Copolymer, einem Vinylchlorid-Copolymer, einem Styrol-Vinylacetat-Copolymer, und einem N-Vinylpyrrolidon-Vinylacetat-Copolymer oder einer Verbindung mit einer Polyalkylenglykolkette, wobei die Polyalkylenglykolkette eine Polyethylenglykolkette, eine Polypropylenglykolkette, eine Polytrimethylenglykolkette, und eine Polytetramethylenglykolkette umfasst, und mit der semipermeablen Membran in Kontakt gebracht werden soll, um deren Abstoßungsleistung zu verbessern, zu einer Primärseite der semipermeablen Membran ist, um mit einer Membranoberfläche davon in Kontakt zu kommen, wobei das Verfahren umfasst:

einen Schritt des Änderns, mindestens einmal während des Zuführens, eines Drucks mit einer Schwankungsrate von 0,05 MPa/s oder mehr, wodurch mindestens entweder ein auf die Membranoberfläche wirkender Druck oder eine Permeationsflussrate gegenüber dem Zeitpunkt der normalen Behandlung geändert wird, gefolgt von Aufrechterhaltung des geänderten Drucks oder der Permeationsflussrate, wobei eine Zeit, für die der Druck oder die Permeationsflussrate aufrechterhalten wird, von 10 Sekunden bis 10 Minuten beträgt, und wobei die Flüssigkeit, die den Abstoßungsleistungsverstärker enthält, einen gelösten Stoff enthält, der sich von dem Abstoßungsleistungsverstärker unterscheidet, und wenn eine Konstante X gemäß der Art des Abstoßungsleistungsverstärkers bestimmt wird, und eine Menge der Flüssigkeit, die den Abstoßungsleistungsverstärker enthält, der der semipermeablen Membran zugeführt wird, als $Q_{FT}$ [m³/Tag] bezeichnet wird, eine Menge der Flüssigkeit, die den Abstoßungsleistungsverstärker enthält, die durch die semipermeable Membran permeiert wird, als $Q_{PT}$ [m³/Tag] bezeichnet wird, eine Membranfläche der semipermeablen Membran als A [m²] bezeichnet wird, eine Konzentration des Abstoßungsleistungsverstärkers als C [mg/l] bezeichnet wird, eine Flüssigkeitsdurchgangszeit als t [h] bezeichnet wird, und ein osmotischer Druck der zugeführten Flüssigkeit als $\pi$ bezeichnet wird, die Behandlung angewendet wird, um zu erfüllen:

$$1{,}0X \leq Q_{PT}/A \times C \times t \leq 1{,}4X$$

und

$$0,02 \leq Q_{PT}/Q_{FT} \leq 0,2$$

wenn der osmotische Druck $\pi$ weniger als 1 bar beträgt;

$$0,8X \leq Q_{PT}/A \times C \times t \leq 1,2X$$

und

$$0,2 \leq Q_{PT}/Q_{FT} \leq 0,4$$

wenn der osmotische Druck $\pi$ 1 bar oder mehr und weniger als 20 bar beträgt; und

$$0,6X \leq Q_{PT}/A \times C \times t \leq 1,0X$$

und

$$0,3 \leq Q_{PT}/Q_{FT} \leq 0,5$$

wenn der osmotische Druck $\pi$ 20 bar oder mehr und 40 bar oder weniger beträgt,

wobei die Durchgangszeit t [h] die Zeit ist, für die die den Abstoßungsleistungsverstärker enthaltende Flüssigkeit durchgeführt wird und 0,5 bis 24 Stunden beträgt, und
wobei X wie folgt bestimmt wird:
eine Behandlungsflüssigkeit wird durch Auflösen von 500 mg/l NaCl in 100 l reinem Wasser hergestellt, eine semipermeable Membran als Behandlungsziel wird in eine Flachmembranzelle, die in "M. Taniguchi et al., "Boron Reduction performance of reverse osmosis seawater desalination process", Journal of Membrane Science, 183, 259-267 (2001)", beschrieben ist, eingesetzt, und die anfängliche Leistung der semipermeablen Membran wird durch Zirkulieren der Behandlungsflüssigkeit bei einer Durchflussrate von 3,5 l, 25°C und einem Druck von 4,5 bar gemessen, wobei das gesamte Permeat und das Konzentrat zyklisch verwendet werden; und zu diesem Zeitpunkt werden der Permeationsfluss F, der die Permeatmenge pro Membranfläche ist, und die NaCl-Abstoßungsleistung R, die 100-100×NaCl-Konzentration des Permeats pro NaCl-Konzentration der Behandlungsflüssigkeit beträgt, gemessen, um $R_0$ als Zielabstoßungsleistung und $F_1$ und $R_1$ als Anfangsleistung zu erhalten, und anschließend werden 2 $\mu$mol/l des Abstoßungsleistungsverstärkers als abstoßungsleistungssteigernde Behandlung hinzugefügt, und nach Behandlung für eine festgelegte Zeit werden zeitliche Änderungen des Permeationsflusses $F_2$ und der NaCl-Abstoßungsleistung $R_2$ gemessen und die Zeit [h], bis das Abstoßungsleistungsverbesserungsverhältnis $R_{IM} = (R_0 - R_1)/(R_0 - R_2) = (C_{P0} - C_{P1})/(C_{P0} - C_{P2})$ 2 überschreitet, wird gemessen, wobei diese Zeit als X genommen wird.

2. Verfahren zur Verbesserung der Abstoßungsleistung einer semipermeablen Membran nach Anspruch 1, wobei die Permeationsflussrate um das 0,8-fache oder weniger oder 1,2-fache oder mehr der Permeationsflussrate zum Zeitpunkt der normalen Behandlung, mindestens einmal während der Zufuhr, schwankt.

3. Verfahren zur Verbesserung der Abstoßungsleistung einer semipermeablen Membran nach Anspruch 1 oder 2, wobei die Änderung der Permeationsflussrate durch eine Druckänderung zumindest auf der Primärseite oder einer Sekundärseite der semipermeablen Membran verursacht wird.

4. Verfahren zur Verbesserung der Abstoßungsleistung einer semipermeablen Membran nach einem der Ansprüche 1 bis 3, wobei die Permeationsflussrate auf das 0,1-fache oder weniger der Permeationsflussrate zum Zeitpunkt der normalen Behandlung eingestellt wird.

5. Verfahren zur Verbesserung der Abstoßungsleistung einer semipermeablen Membran nach einem der Ansprüche 1 bis 4, wobei eine Zufuhrrichtung zur semipermeablen Membran mindestens einmal umgekehrt wird.

6. Verfahren zur Verbesserung der Abstoßungsleistung einer semipermeablen Membran nach einem der Ansprüche 1 bis 5, wobei der Abstoßungsleistungsverstärker durch mindestens ein Fluid aus Zufuhrwasser, das ein Ziel der Behandlung mit semipermeablen Membranen ist, Konzentrat und Permeat davon verdünnt wird.

7. Verfahren zur Verbesserung der Abstoßungsleistung einer semipermeablen Membran nach einem der Ansprüche 1 bis 6, wobei die Primärseite der semipermeablen Membran aus mehrstufigen Einheiten besteht, die miteinander kommunizieren, und zum Zeitpunkt des Verdünnens der Flüssigkeit, die den Abstoßungsleistungsverstärker enthält, der von der Primärseite einer semipermeablen Membran einer früheren Stufe abgegeben wird, und des Zuführens der Flüssigkeit zu einer semipermeablen Membraneinheit einer späteren Stufe, Verdünnungswasser zugemischt wird.

8. Verfahren zur Verbesserung der Abstoßungsleistung einer semipermeablen Membran nach Anspruch 7, wobei das Verdünnungswasser mindestens Permeat der semipermeablen Membran oder Zufuhrwasser, das ein Ziel der semipermeablen Membranbehandlung ist, enthält.

9. Verfahren zur Verbesserung der Abstoßungsleistung einer semipermeablen Membran nach einem der Ansprüche 1 bis 8, wobei die den Abstoßungsleistungsverstärker enthaltende Flüssigkeit nach dem Erhitzen auf eine Temperatur im Bereich von der höchsten Betriebstemperatur zum Zeitpunkt der Frischwassererzeugung bis 60°C zugeführt wird.

10. Verfahren zur Verbesserung der Abstoßungsleistung einer semipermeablen Membran nach einem der Ansprüche 1 bis 6, wobei, wenn eine angenommene Temperatur zum Bestimmen der Konstanten X als $T_1$°C bezeichnet wird, eine daraus bestimmte Konstante als $X_1$ bezeichnet wird, und eine Abstoßungsleistungsverbesserungs-Behandlungstemperatur als $T_2$ bezeichnet wird,

$$X=X_1/\{1+a\times(T_2-T_1)\}$$

vorausgesetzt, dass a eine Konstante ist, die $0{,}02 \leq a \leq 0{,}03$ erfüllt.

11. Verfahren zur Verbesserung der Abstoßungsleistung einer semipermeablen Membran nach einem der Ansprüche 1 bis 10, wobei die semipermeable Membran erwärmt wird, nachdem sie unter Druck gesetzt und ihr die Flüssigkeit, die den Abstoßungsleistungsverstärker enthält, zugeführt wurde.

12. Verfahren zur Verbesserung der Abstoßungsleistung einer semipermeablen Membran nach Anspruch 11, wobei das Erwärmen der semipermeablen Membran durch Zuführen und Durchleiten von Wasser hoher Temperatur durchgeführt wird.

**Revendications**

1. Procédé d'amélioration de performance de rejet de membrane semi-perméable qui est un procédé d'amélioration d'une performance de rejet d'une membrane semi-perméable par mise sous pression et acheminement d'un liquide contenant un agent d'amélioration de performance de rejet à une concentration allant de 0,5 μmol/L à 100 μmol/L, où l'agent d'amélioration de performance de rejet est un polymère à base de vinyle choisi parmi l'acétate de polyvinyle, l'alcool polyvinylique, un copolymère acétate de vinyle-éthylène, un copolymère de chlorure de vinyle, un copolymère styrène-acétate de vinyle et un copolymère N-vinylpyrrolidone-acétate de vinyle ou un composé ayant une chaîne polyalkylène glycol, où la chaîne polyalkylène glycol comprend une chaîne polyéthylène glycol, une chaîne polypropylène glycol, une chaîne polytriméthylène glycol et une chaîne polytétraméthylène glycol, et doit être mis en contact avec la membrane semi-perméable pour améliorer la performance de rejet de celle-ci vers un côté primaire de la membrane semi-perméable pour entrer en contact avec une surface de membrane de celle-ci, le procédé comprenant :

une étape de changement, au moins une fois pendant l'acheminement, d'une pression à un taux de fluctuation supérieur ou égal à 0,05 MPa/s, changeant ainsi au moins soit une pression agissant sur la surface de membrane soit un débit de perméation par rapport à celle/celui au moment du traitement normal, suivie du maintien de la pression ou du débit de perméation changé(e),
dans lequel un temps pendant lequel la pression ou le débit de perméation est maintenu(e) est compris entre 10 secondes et 10 minutes, et
dans lequel le liquide contenant l'agent d'amélioration de performance de rejet contient un soluté différent de l'agent d'amélioration de performance de rejet, et lorsqu'une constante X est déterminée selon le type de l'agent d'amélioration de performance de rejet et une quantité du liquide contenant l'agent d'amélioration de performance de rejet acheminée vers la membrane semi-perméable est désignée par $Q_{FT}$ [m$^3$/jour], une quantité du liquide contenant l'agent d'amélioration de performance de rejet ayant traversé par perméation la membrane semi-perméable est désignée par $Q_{PT}$ [m$^3$/jour], une superficie de membrane de la membrane semi-perméable est désignée par A [m$^2$], une concentration d'agent d'amélioration de performance de rejet est désignée par C [mg/l], un temps de transit de liquide est désigné par t [h] et une pression osmotique du liquide acheminé est désignée par $\pi$, le traitement est appliqué pour satisfaire :

$$1,0X \leq Q_{PT}/A \times C \times t \leq 1,4X$$

et

$$0,02 \leq Q_{PT}/Q_{FT} \leq 0,2$$

dans le cas où la pression osmotique $\pi$ est inférieure à 1 bar ;

$$0,8X \leq Q_{PT}/A \times C \times t \leq 1,2X$$

et

$$0,2 \leq Q_{PT}/Q_{FT} \leq 0,4$$

dans le cas où la pression osmotique $\pi$ est supérieure ou égale à 1 bar et inférieure à 20 bar ; et

$$0,6X \leq Q_{PT}/A \times C \times t \leq 1,0X$$

et

$$0,3 \leq Q_{PT}/Q_{FT} \leq 0,5$$

dans le cas où la pression osmotique $\pi$ est supérieure ou égale à 20 bar et inférieure ou égale à 40 bar,

dans lequel le temps de transit t [h] est le temps pendant lequel le liquide contenant l'agent d'amélioration de performance de rejet passe et est compris entre 0,5 et 24 heures, et
dans lequel X est déterminé comme suit :

un liquide de traitement est préparé en dissolvant 500 mg/L de NaCl dans 100 L d'eau pure, une membrane semi-perméable comme cible de traitement est placée dans une cellule à membrane en feuille plate décrite dans « M. Taniguchi, et al., « Boron Reduction performance of reverse osmosis seawater desalination process », Journal of Membrane Science, 183, 259-267 (2001) », et
la performance initiale de la membrane semi-perméable est mesurée en faisant circuler le liquide de traitement à un débit de 3,5 L, à 25°C et à une pression de 4,5 bar, où l'ensemble du perméat et du concentrat est utilisé de manière cyclique ; et à ce moment, le flux de perméation F, qui est la quantité de perméat par superficie de membrane et la performance de rejet de NaCl R, qui est égale à 100-100×concentration de NaCl du perméat par concentration de NaCl du liquide de traitement sont mesurés pour obtenir $R_0$ comme performance de rejet cible et $F_1$ et $R_1$ comme performance initiale, et par la suite, 2 $\mu$mol/L de l'agent d'amélioration de performance de rejet sont ajoutés comme traitement d'amélioration de performance de rejet, et après traitement pendant un temps défini, des changements dans le temps du flux de perméation $F_2$ et de la performance de rejet de NaCl $R_2$ sont mesurés et le temps [h] écoulé jusqu'à ce que le rapport d'amélioration de performance de rejet $R_{IM}=(R_0-R_1)/(R_0-R_2)=(C_{P0}-C_{P1})/(C_{P0}-C_{P2})$ dépasse 2 est mesuré, où ce temps est considéré comme X.

**2.** Procédé d'amélioration de performance de rejet de membrane semi-perméable selon la revendication 1, dans lequel le débit de perméation fluctue jusqu'à 0,8 fois ou moins ou 1,2 fois ou plus le débit de perméation au moment du traitement normal, au moins une fois pendant l'acheminement.

**3.** Procédé d'amélioration de performance de rejet de membrane semi-perméable selon la revendication 1 ou 2, dans lequel le changement du débit de perméation est provoqué par un changement de pression au moins sur le côté primaire ou sur un côté secondaire de la membrane semi-perméable.

**4.** Procédé d'amélioration de performance de rejet de membrane semi-perméable selon l'une quelconque des revendications 1 à 3, dans lequel le débit de perméation est fixé à 0,1 fois ou moins le débit de perméation au moment du traitement normal.

**5.** Procédé d'amélioration de performance de rejet de membrane semi-perméable selon l'une quelconque des revendications 1 à 4, dans lequel un sens d'acheminement vers la membrane semi-perméable est inversé au moins une fois.

**6.** Procédé d'amélioration de performance de rejet de membrane semi-perméable selon l'une quelconque des revendications 1 à 5, dans lequel l'agent d'amélioration de performance de rejet est dilué par au moins un fluide d'eau d'alimentation qui est une cible de traitement par membrane semi-perméable, son concentrat et son perméat.

**7.** Procédé d'amélioration de performance de rejet de membrane semi-perméable selon l'une quelconque des revendications 1 à 6, dans lequel le côté primaire de la membrane semi-perméable est constitué par des unités à plusieurs étages communiquant entre elles, et au moment de la dilution du liquide contenant l'agent d'amélioration de performance de rejet évacué du côté primaire d'une membrane semi-perméable d'étage antérieur et de l'acheminement du liquide vers une unité de membrane semi-perméable d'étage ultérieur, l'eau de dilution est mélangée.

**8.** Procédé d'amélioration de performance de rejet de membrane semi-perméable selon la revendication 7, dans lequel l'eau de dilution contient au moins du perméat de la membrane semi-perméable ou de l'eau d'alimentation qui est une cible de traitement par membrane semi-perméable.

**9.** Procédé d'amélioration de performance de rejet de membrane semi-perméable selon l'une quelconque des revendications 1 à 8, dans lequel le liquide contenant l'agent d'amélioration de performance de rejet est acheminé après chauffage à une température se trouvant dans la plage allant de la température de fonctionnement la plus élevée au moment de la génération d'eau douce à 60°C.

**10.** Procédé d'amélioration de performance de rejet de membrane semi-perméable selon l'une quelconque des revendications 1 à 6, dans lequel lorsqu'une température supposée pour déterminer la constante X est désignée par $T_1$°C, une constante déterminée à partir de celle-ci est désignée par $X_1$ et une température de traitement d'amélioration de performance de rejet est désignée par $T_2$,

$$X=X_1/\{1+ax(T_2-T_1)\}$$

à condition que a soit une constante satisfaisant $0,02 \leq a \leq 0,03$.

**11.** Procédé d'amélioration de performance de rejet de membrane semi-perméable selon l'une quelconque des revendications 1 à 10, dans lequel la membrane semi-perméable est chauffée après mise sous pression et acheminement du liquide contenant l'agent d'amélioration de performance de rejet vers celle-ci.

**12.** Procédé d'amélioration de performance de rejet de membrane semi-perméable selon la revendication 11, dans lequel le chauffage de la membrane semi-perméable est effectué par alimentation et passage d'eau à température élevée.

Fig. 1

*Fig. 2*

*Fig. 3*

EP 3 243 562 B1

*Fig. 4*

EP 3 243 562 B1

*Fig. 5*

Fig. 6

EP 3 243 562 B1

*Fig. 7*

*Fig. 8*

*Fig. 9*

EP 3 243 562 B1

Fig. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 55114306 A
- JP 59030123 A
- JP 2007289922 A
- JP 2008132421 A
- JP 2008086945 A
- JP 2011161435 A
- JP 2068102 A

- JP 2008036522 A
- JP 2009022888 A
- JP 2008155123 A
- JP 2008183488 A
- EP 2684598 A1
- EP 2172257 A1

**Non-patent literature cited in the description**

- **TADAHIRO UEMURA et al.** Chlorine Resistance of Composite Reverse Osmosis Membranes and Changes in Membrane Structure and Membrane Separation Properties Caused by Chlorination Degradation. *Bulletin of the Society of Sea Water Science, Japan,* 2003, vol. 57 (3

- **M. TANIGUCHI et al.** Boron Reduction performance of reverse osmosis seawater desalination process. *Journal of Membrane Science,* 2001, vol. 183, 259-267
- **M. TANIGUCHI et al.** Behavior of a reverse osmosis plant adopting a brine conversion. *Journal of Membrane Science,* 2000, vol. 183, 249-257